(19) **Europäisches Patentamt**
**European Patent Office**
**Office européen des brevets**

(11) **EP 2 540 045 B1**

(12) **EUROPEAN PATENT SPECIFICATION**

(45) Date of publication and mention
of the grant of the patent:
**11.10.2017 Bulletin 2017/41**

(21) Application number: **11706316.4**

(22) Date of filing: **22.02.2011**

(51) Int Cl.:
***H04L 27/34*** (2006.01)  ***H04L 5/00*** (2006.01)

(86) International application number:
**PCT/GB2011/050344**

(87) International publication number:
**WO 2011/104535 (01.09.2011 Gazette 2011/35)**

(54) **MULTI-LEVEL MODULATION SYSTEM AND METHOD**

MEHRSTUFIGERMODULATION -SYSTEM UND -VERFAHREN

SYSTÈME ET PROCÉDÉ DE MODULATION À PLUSIEURS NIVEAUX

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **18.10.2010 GB 201017563
25.02.2010 GB 201003236**

(43) Date of publication of application:
**02.01.2013 Bulletin 2013/01**

(73) Proprietor: **Sony Corporation
Tokyo 108-0075 (JP)**

(72) Inventors:
• **ATUNGSIRI, Samuel, Asanbeng
Basingstoke Hampshire RG21 4BS (GB)**
• **STADELMEIER, Lothar
70569 Stuttgart (DE)**
• **MUHAMMAD, Sven
70569 Stuttgart (DE)**
• **ROBERT, Jorg
48691 Vreden (DE)**
• **OKEHIE, Obioma, Chiedozie, Donald
Redhill Surrey RH1 3JS (GB)**
• **TAYLOR, Matthew, Paul, Athol
Hampshire BH24 1JQ (GB)**
• **ZOELLNER, Jan
38106 Braunschweig (DE)**

(74) Representative: **D Young & Co LLP
120 Holborn
London EC1N 2DY (GB)**

(56) References cited:
**WO-A2-2007/050217    US-A1- 2006 178 755
US-A1- 2008 159 186**

• **STEPHAN JAECKEL ET AL: "Scalable video
transmission in multiantenna broadcast
systems", WIRELESS CONFERENCE, 2008. EW
2008. 14TH EUROPEAN, IEEE, PISCATAWAY, NJ,
USA, 22 June 2008 (2008-06-22), pages 1-6,
XP031320063, ISBN: 978-3-8007-3102-2**
• **KUECHEN F ET AL: "TERRESTRIAL NETWORK
PLANNING FOR DIGITAL VIDEO
BROADCASTING TO MOBILE RECEIVERS",
VTC'98. 48TH. IEEE VEHICULAR TECHNOLOGY
CONFERENCE. OTTAWA, CANADA, MAY 18 - 21,
1998; [IEEE VEHICULAR TECHNOLOGY
CONFERENCE], NEW YORK, NY : IEEE, vol.
CONF. 48, 18 May 1998 (1998-05-18), pages
1889-1893, XP000903348, ISBN:
978-0-7803-4321-4**
• **"Digital Video Broadcasting (DVB); Transmission
System for Handheld Terminals (DVB-H); ETSI EN
302 304", ETSI STANDARDS, LIS, SOPHIA
ANTIPOLIS CEDEX, FRANCE, vol. BC, no. V1.1.1,
1 November 2004 (2004-11-01), XP014026966,
ISSN: 0000-0001**

**Description**

**Field of Invention**

The present invention relates to transmitters for transmitting data via Orthogonal Frequency Division Multiplexed (OFDM) symbols in which the data is provided from a plurality of different data pipes.

Embodiments of the present invention find application in receiving data communicated using OFDM symbols which are transmitted using communication systems which comprise a plurality of base stations disposed throughout a geographical area. In some embodiments the communication system is arranged to broadcast video, audio or data.

**Background of the Invention**

Orthogonal Frequency Division Multiplexing (OFDM) is a modulation technique which has found much favour in communication systems, such as for example those designed to operate in accordance with the first and second generation Digital Video Broadcasting terrestrial standards (DVD-T/T2) and is also being proposed for fourth generation mobile communication systems which are also known as Long Term Evolution (LTE). OFDM can be generally described as providing K narrow band sub-carriers (where K is an integer) which are modulated in parallel, each sub-carrier communicating a modulated data symbol such as Quadrature Amplitude Modulated (QAM) modulation symbol or Quaternary Phase-shift Keying (QPSK) modulation symbol. The modulation of the sub-carriers is formed in the frequency domain and transformed into the time domain for transmission. Since the data symbols are communicated in parallel on the sub-carriers, the same modulated symbols may be communicated on each sub-carrier for an extended period, which can be longer than the coherence time of the radio channel. The sub-carriers are modulated in parallel contemporaneously, so that in combination the modulated carriers form an OFDM symbol. The OFDM symbol therefore comprises a plurality of sub-carriers each of which has been modulated contemporaneously with a different modulation symbol. An example of which can be seen in patent publication US 2008/159186. In the Next Generation for Hand held (NGH) television system it has been proposed to use OFDM to transmit television signals from base stations disposed throughout a geographical area. In some examples the NGH system will form a network in which a plurality of base stations communicate OFDM symbols contemporaneously on the same carrier frequency thereby forming a so-called single frequency network. As a result of some of the properties of OFDM, a receiver may receive the OFDM signals from two or more different base stations which can then be combined in the receiver to improve the integrity of the communicated data.

Whilst a single frequency network has advantages in terms of operation and improved integrity of the communicated data, it also suffers a disadvantage if data local to a part of the geographical area is required to be communicated. For example, it is well known in the United Kingdom that the national carrier, the BBC, broadcasts television news throughout the entire national network but then switches, at certain times, to "local news" in which a local news programme is transmitted which is specifically related to a local area within the national network. However, the United Kingdom operates a multi-frequency DVB-T system so that the insertion of local news or local content of any sort is a trivial matter because the different regions transmit DVB-T television signals on different frequencies and so television receivers simply tune to an appropriate carrier frequency for the region without interference from other regions. However, providing an arrangement to insert data locally in a single frequency network presents a technical problem.

A known technique for providing a hierarchical or multi-layer modulation scheme in a single frequency OFDM network is disclosed in US 2008/0159186. The hierarchical modulation scheme provides a plurality of modulation layers which can be used to communicate data from different data sources or pipes contemporaneously.

**Summary of Invention**

According to the present invention there is provided a communications system comprising a plurality of base stations disposed throughout a geographical area for providing a facility for wireless communications with mobile devices within a radio coverage area provided by the base stations. Each of the base stations includes a transmitter for communicating data via Orthogonal Frequency Division Multiplexed (OFDM) symbols on a common radio frequency signal, the OFDM symbols including a plurality of sub-carrier signals formed in the frequency domain and modulated with the data to be communicated. The transmitter includes a modulator arranged in operation to receive on a first input, data symbols from a first data pipe according to a first communications channel for transmission, to receive on a second input, data symbols from a local insertion data pipe according to a local communications channel for transmission, and to modulate the sub-carrier signals of the OFDM symbols with either the data symbols from the first data pipe or the data symbols from both the first data pipe and the local insertion pipe.

The modulation of the sub-carrier signals of the OFDM symbols with the data symbols from the first data pipe is performed by mapping the data symbols onto modulation symbols according to a first modulation scheme, and the modulation of the sub-carrier signals of the OFDM symbols with the data symbols from the first data pipe and the local insertion pipe is performed by mapping the data symbols from the first data pipe and the local insertion pipe onto modulation symbols according to a second modulation scheme. The transmitter also includes a radio frequency modulator which is arranged to modulate a radio frequency carrier signal with the OFDM symbols for transmission.

The first modulation scheme is a lower order modulation scheme providing first modulation symbols with values from a smaller number of constellation points in the complex plane than the second modulation scheme which is a higher order modulation scheme, the second modulation scheme providing second modulation symbols with values which are disposed in the complex plane about corresponding values of the first modulation scheme. The constellation points of the second modulation scheme are disposed with the effect that detection of one of the second modulation symbols of the second modulation scheme will provide data symbols from the local insertion pipe and/or the first data pipe and allow the detection of first modulation symbols from the first modulation scheme providing data symbols from the first data pipe, in the presence of modulation symbols from the second modulation scheme, thereby providing the modulator with a plurality of modulation layers. A first sub-set of one or more of the base stations within the geographical area are arranged to transmit the data from the first data pipe and the local insertion pipe, when a second sub-set of one or more base stations are arranged to transmit data from the first data pipe only, and the base stations from the first sub-set and the second sub-set are arranged to transmit on the common radio frequency carrier signal.

According to the arrangement disclosed in US 2008/0159186 published 3 July 2008, a single carrier frequency OFDM network is provided with a facility for communicating data from different pipes contemporaneously by using two related modulation schemes to form a plurality of different modulation "layers". As will be explained shortly, a first modulation scheme is selected for communicating data from a first data pipe and a second modulation scheme related to the first modulation scheme is selected for communicating data according to the first and a second communications pipes. The second modulation scheme comprises an increased number of constellation points in the complex plane than the first modulation scheme.

According to example embodiments of the present invention, a communication system is arranged such that one or more base stations from a plurality of base stations which form a communications network are selected to transmit OFDM symbols which have sub-carriers modulated in accordance with the second modulation scheme. Thus, the second modulation scheme is used to convey data symbols from both the first data pipe and the local insertion pipe. Because of the arrangement of the second modulation scheme with respect to the first modulation scheme, the data symbols from the first data pipe may be received even when transmitted on the same radio frequency carrier, because detection of a constellation point from the first modulation scheme will require a lower signal to noise ratio than the second modulation scheme. This is because the first modulation scheme forms a sub-set of constellation points in the complex plane of the second modulation scheme, which can be thought of as a more course version of the second modulation scheme, so that differentiation between constellation points of the first modulation symbols in the complex plane allows the data from the first data pipe to be more easily recovered. Furthermore, because other base stations may not be communicating the local insertion pipe data, receivers, within the geographical area in which these other base stations are disposed, will still be able to detect the data from the first data pipe. This is because OFDM signals transmitted from a neighbouring base station on the common radio frequency carrier signal using the second modulation scheme will simply appear as noise with respect to a detector detecting OFDM symbols according to the first modulation scheme. Thus an effective and efficient way of inserting local content in a single frequency network is provided.

In some examples, the transmitter may include a scheduler for forming the modulated sub-carrier signals into the OFDM symbols and a framing unit which arranges the OFDM symbols for transmission according to a time division multiplexed frame. Furthermore, the scheduler and the framing unit are arranged to transmit OFDM symbols which are carrying data symbols from both the first data pipe and the local insertion pipe using the second modulation scheme in some time division multiplexed frames and not others. More particularly, in other examples, the base stations of the communications network maybe formed into clusters, each cluster including a predetermined number of the base stations, each base station in the cluster being assigned to one of a corresponding number of time division multiplexed frames, and the transmitter of the base station is arranged to transmit the OFDM symbols which are carrying data symbols from both the first data pipe and the local insertion pipe using the second modulation scheme in the time division multiplexed frame which has been assigned to that base station and not others. As a result an amount of "interference" caused by transmitting OFDM symbols using the second modulation scheme on the common radio frequency carrier to a receiver which is detecting and recovering the data symbols from OFDM symbols modulated using the first modulation scheme will be reduced in proportion to the number of base stations in each cluster. The word "interference" is used here in the sense that the OFDM symbols with sub-carriers modulated in accordance with the second modulation scheme will reduce the signal to noise ratio of a receiver detecting data symbols carried by OFDM symbols with sub-carriers modulated in accordance with the first modulation scheme, because as explained above a property of a layered modulation arrangement will be to increase noise to a receiver.

Various further aspects and features of the present invention are defined in the appended claims and include a method of communicating.

## Brief Description of Drawings

Embodiments of the present invention will now be described by way of example only with reference to the accompanying drawings in which like parts are referred to using the same numerical designations and in which:

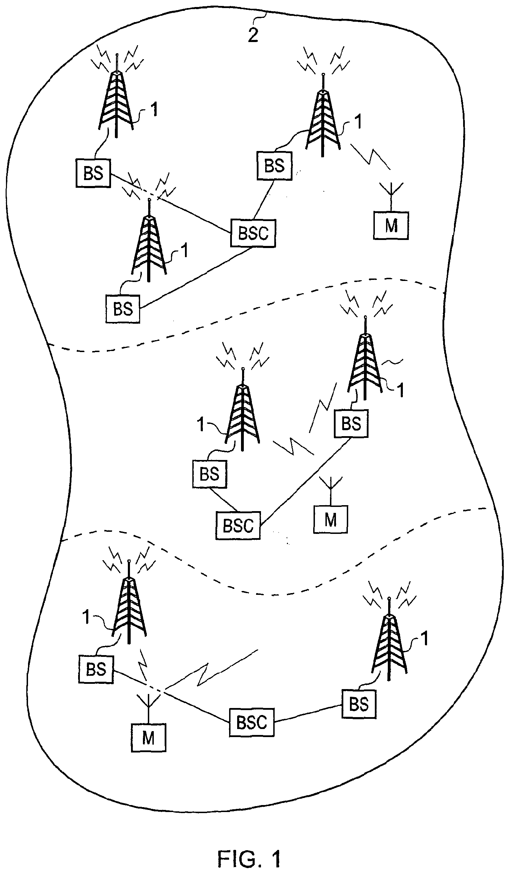

Figure 1 is a schematic representation of a plurality of base stations which form a single frequency network for broadcasting for example video signals which may form part of a Next Generation Hand-held (NGH) TV broadcasting system;

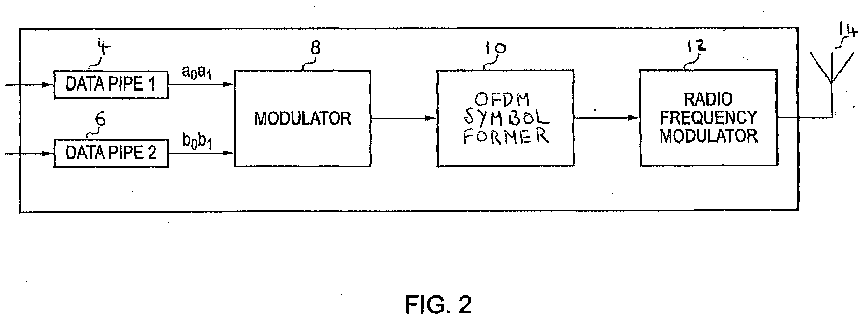

Figure 2 is a schematic block diagram of an example transmitter according to the prior art;

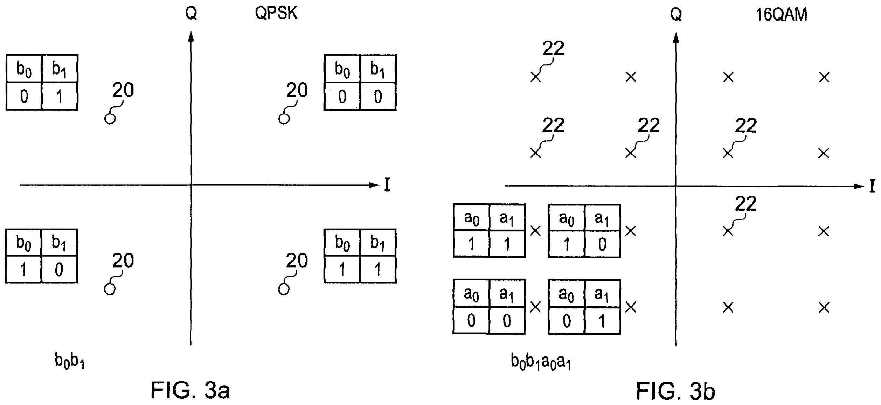

Figure 3a is a schematic representation of a complex plane providing an illustration of signal constellation points for a first modulation scheme of QPSK; and Figure 3b is a schematic representation of a complex plane providing an illustration of signal constellation points for a second modulation scheme of 16QAM according to the prior art;

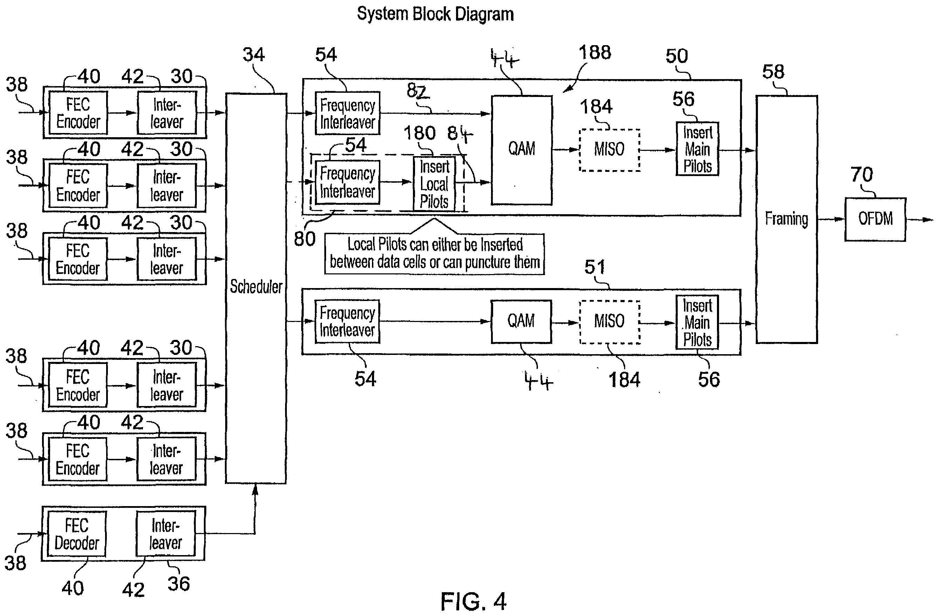

Figure 4 is a schematic block diagram of part of a transmitter used in one or more of the base stations shown in Figure 1 according to the present technique which supports SISO or MISO;

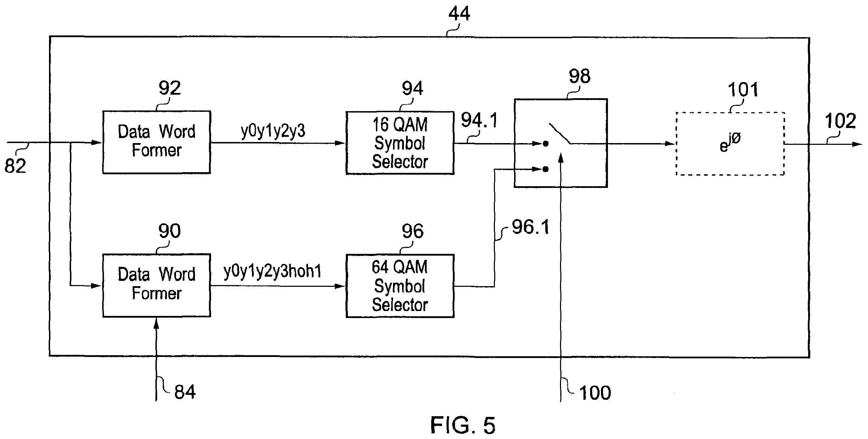

Figure 5 is a schematic block diagram of an example modulator which forms part of the transmitter shown in Figure 4;

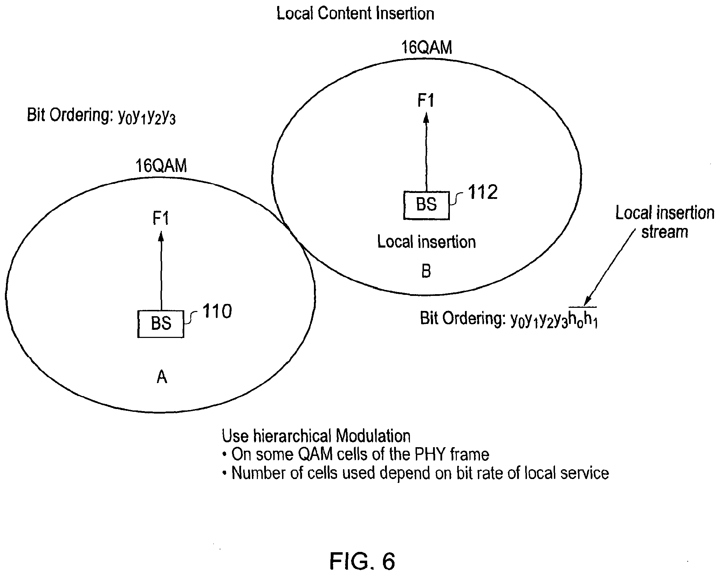

Figure 6 is an illustrative representation of two neighbouring base stations forming two cells A and B which are using a first modulation scheme of 16QAM and a second modulation scheme of 64QAM respectively;

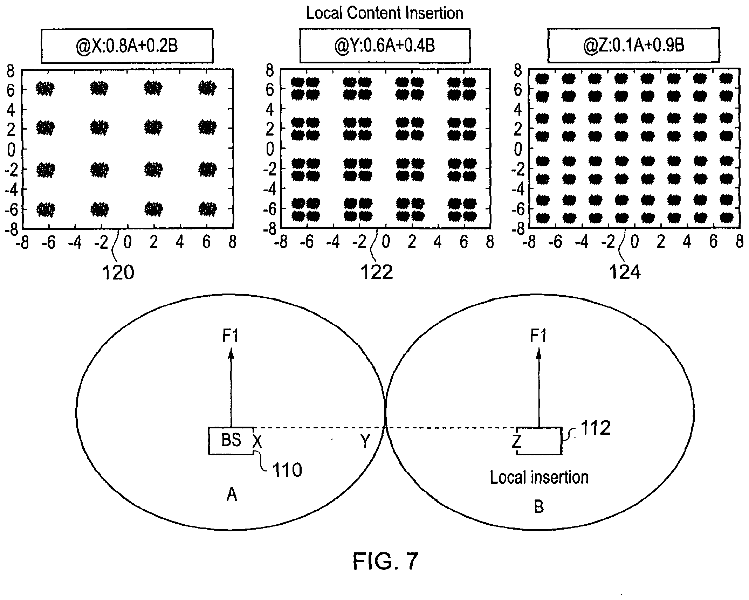

Figure 7 is a schematic representation showing the effects on the constellation points as received by a mobile device at three different positions X, Y, Z between the two base stations A and B of Figure 6;

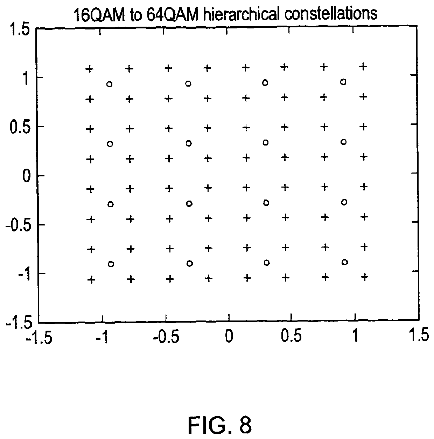

Figure 8 is an illustrative representation of constellation points in a complex plane for a first modulation scheme of 16QAM superimposed on a second modulation scheme of 64QAM;

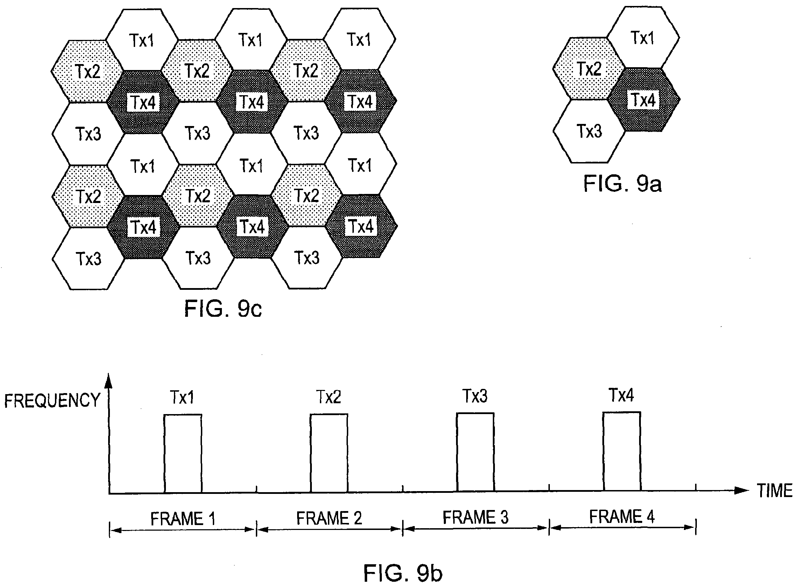

Figure 9a is an illustrative representation of a cluster of four cells served by four base stations according to the present technique; Figure 9b is a graphical representation of a plot of frequency with respect to time providing an illustration of a time division multiplexed frame structure; and Figure 9c is an illustrative representation of a pattern of cell clusters according to the present technique;

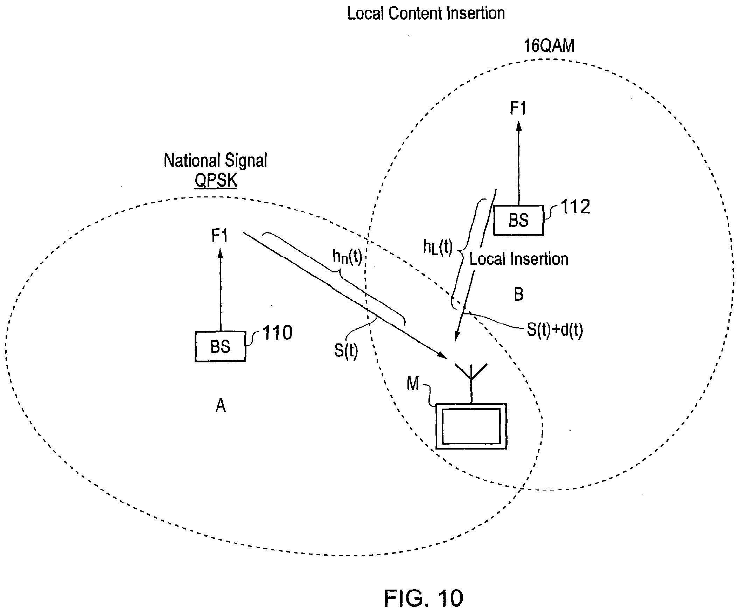

Figure 10 is an illustrative representation of two neighbouring base stations forming two cells A and B which are using a first modulation scheme of 16QAM and a second modulation scheme of 64QAM respectively, and a mobile receiver which may be arranged to recover local service insertion data in the presence of signals from both the first modulation scheme and the second modulation scheme the signal from cell B transiting a channel impulse response $h_n(t)$ and the signal from cell A transiting a channel impulse response $h_l(t)$;

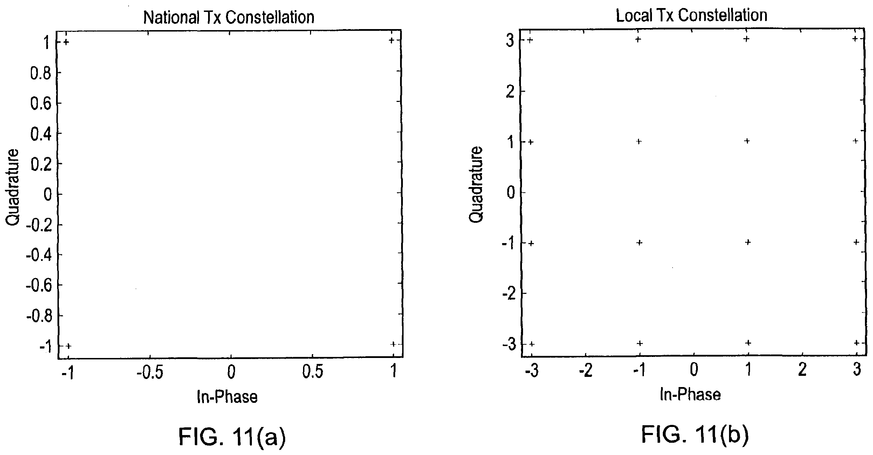

Figure 11a is a schematic representation of a complex plane providing an illustration of signal constellation points for a first modulation scheme of QPSK; and Figure 11b is a schematic representation of a complex plane providing an illustration of signal constellation points for a second modulation scheme of 16QAM wherein reception is without noise and perfect channel estimation;

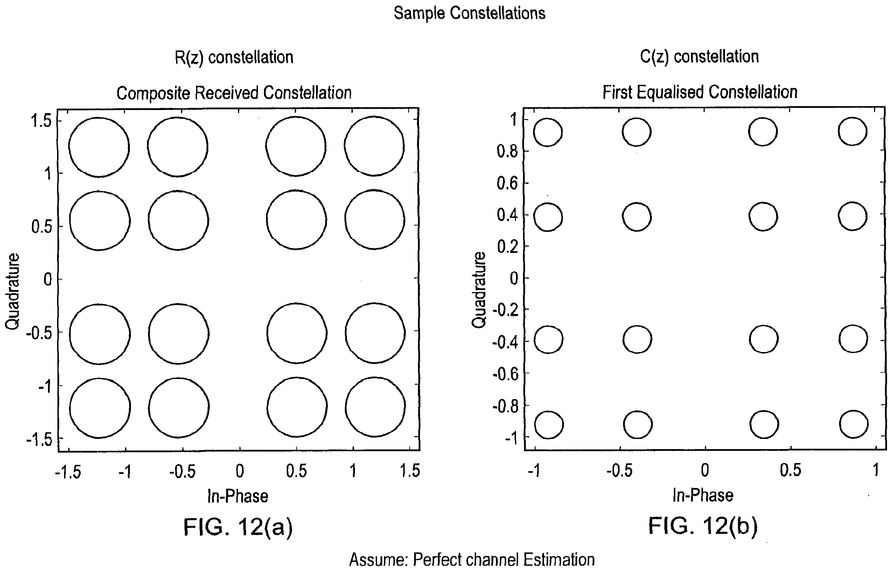

Figure 12a is a schematic representation of a complex plane providing an illustration of signal constellation points for a first modulation scheme of QPSK, when received in the presence of the second modulation scheme; but with the signal from each cell transiting through channels of different channel impulse responses and Figure 12b provides a corresponding representation of the same signal after equalisation using a conventional equaliser with perfect channel estimation;

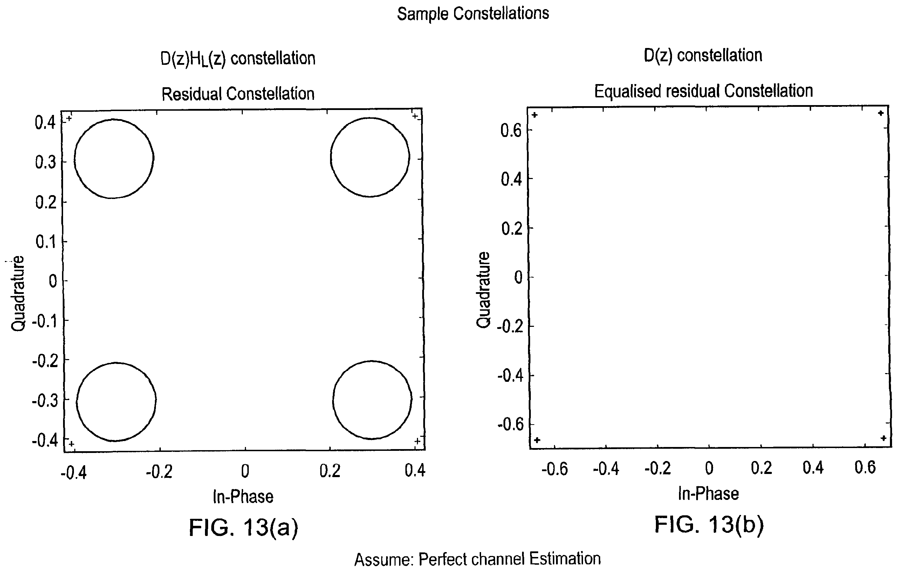

Figure 13a is a schematic representation of a complex plane providing an illustration of signal constellation points after subtracting $S_{est}(s)[(H_l(z)+H_n(z)]$ and Figure 13b is the result of dividing the signal represented in Figure 13a by $H_l(z)$ assuming perfect channel estimation in which the local service insertion channel $H_l(z)$ is known exactly;

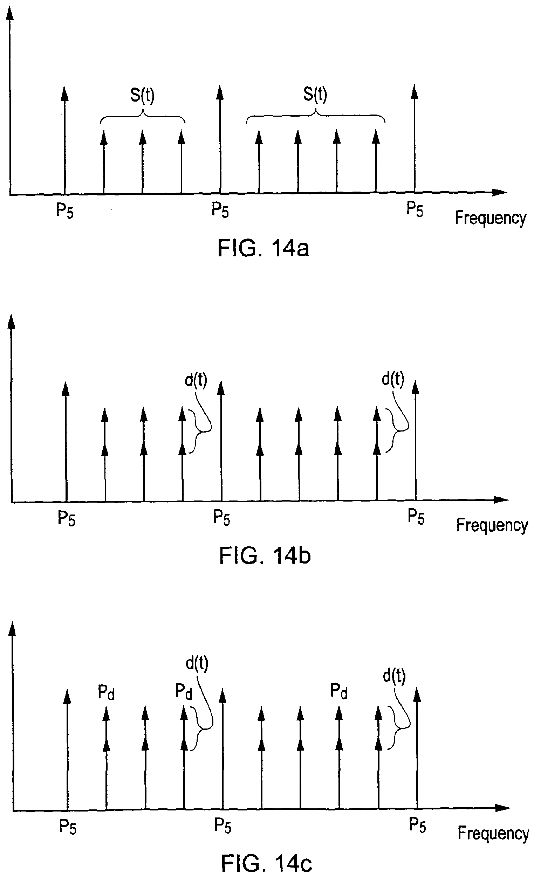

Figure 14a is an illustrative representation of narrow band carriers of an OFDM symbol carrying the national broadcast signal; Figure 14b is an illustrative representation of narrow band carriers of an OFDM symbol carrying both the national signal and the local service insertion signal; and Figure 14c is an illustrative representation of narrow band carriers of an OFDM symbol carrying the local service insertion signal, but adapted in accordance with the present technique to include local pilots;

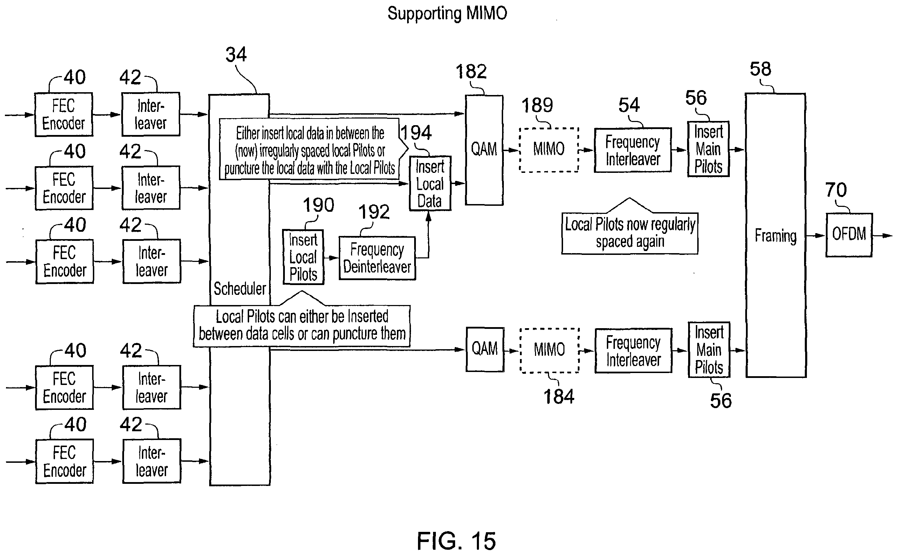

Figure 15 is a schematic block diagram of a transmitter used in one or more of the base stations according to the present technique, which supports MIMO;

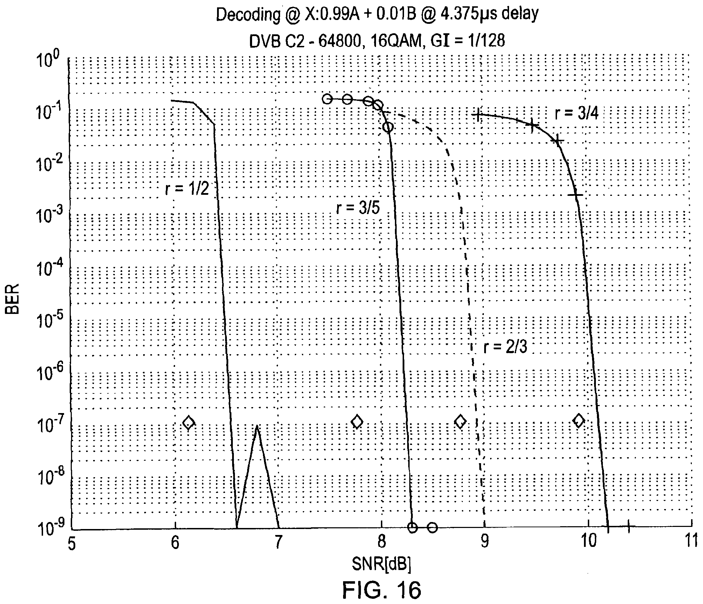

Figure 16 is a graphical plot of bit error rate with respect to signal to noise ratio for example of a low density parity check (LDPC) coded OFDM transmitter-receiver chain, with error correction encoding of rate ½, 3/5, 2/3 and ¾, a first modulation scheme of 16QAM, a second modulation scheme of 64QAM and in which the receiver is considered to be located within coverage area of cell A and to receive OFDM symbols with 99% of the signal power from base station A and 1% from base station B with the signal from B arriving at the receiver 4.375us after the signal from base station A as illustrated by the example diagram shown in Figure 6;

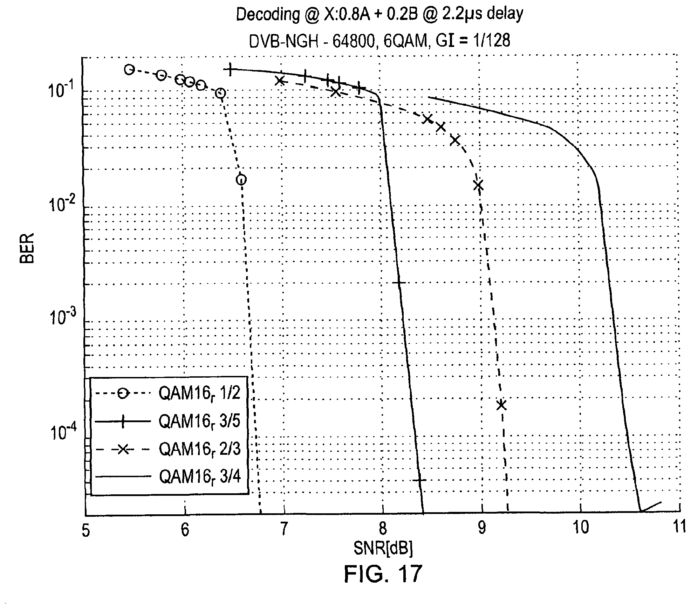

Figure 17 is a graphical plot of bit error rate with respect to signal to noise ratio for the example of a LDPC coded OFDM transmitter-receiver chain, with error correction encoding of rate ½, 3/5, 2/3 and ¾, a first modulation scheme of 16QAM, a second modulation scheme of 64QAM and in which the receiver is considered to be located within coverage area of cell A and to receive OFDM symbols with 80% of the signal power from base station A and 20% from base station B with the signal from B arriving at the receiver 2.2$\mu$s after the signal from base station A as illustrated by the example diagram shown in Figure 6;

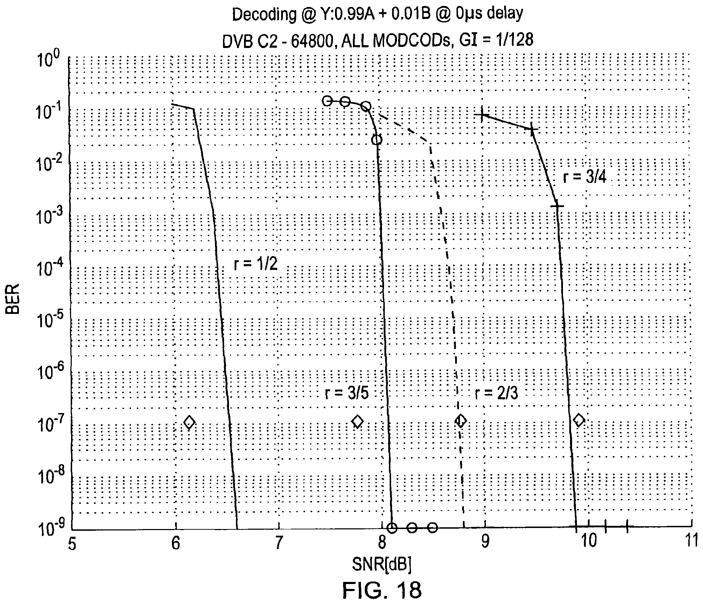

Figure 18 is a graphical plot of bit error rate with respect to signal to noise ratio for example of a LDPC coded OFDM transmitter-receiver chain, with error correction encoding of rate ½, 3/5, 2/3 and ¾, a first modulation scheme of 16QAM, a second modulation scheme of 64QAM and in which the receiver is considered to be located within coverage area of cell A and to receive OFDM symbols with 99% of signal power from base station A and 1% from base station B with zero delay between the signal times of arrival from the two cells illustrated by the example diagram shown in Figure 6;

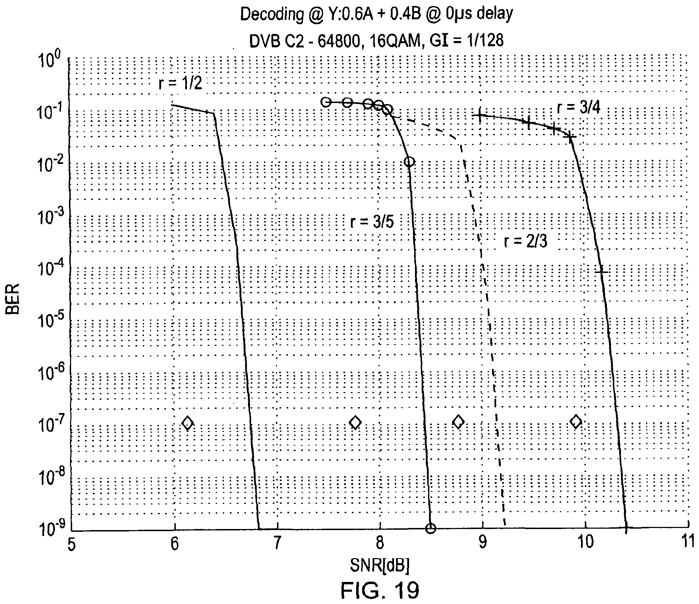

Figure 19 is a graphical plot of bit error rate with respect to signal to noise ratio for example of a LDPC coded OFDM transmitter-receiver chain, with error correction encoding of rate ½, 3/5, 2/3 and ¾, a first modulation scheme of 16QAM, a second modulation scheme of 64QAM and in which the receiver is considered to be located within coverage area of cell A and to receive OFDM symbols with 60% of signal power from base station A and 40% from base station B with zero delay between the signal times of arrival from the two cells illustrated by the example diagram shown in Figure 6;

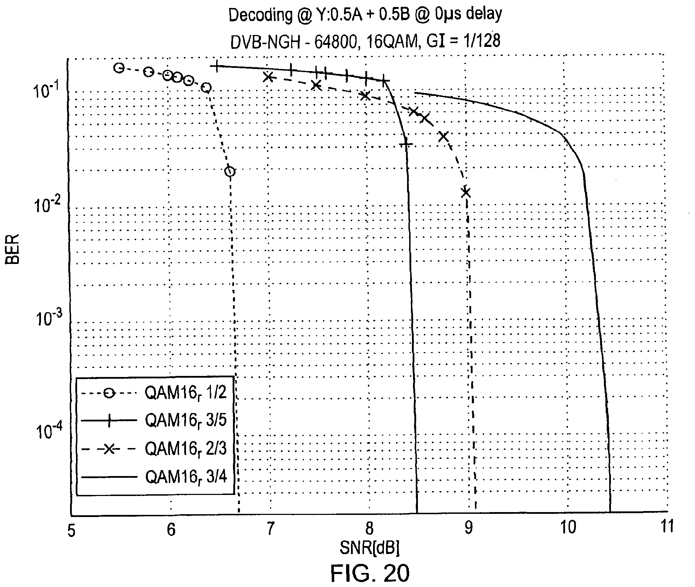

Figure 20 is a graphical plot of bit error rate with respect to signal to noise ratio for example of a LDPC coded OFDM transmitter-receiver chain, with error correction encoding of rate ½, 3/5, 2/3 and ¾, a first modulation scheme of 16QAM, a second modulation scheme of 64QAM and in which the receiver is considered to be located within coverage area of cell A and to receive OFDM symbols with 50% signal power from base station A and 50% from base station B with zero delay between the signal times of arrival from the two cells illustrated by the example diagram shown in Figure 6;

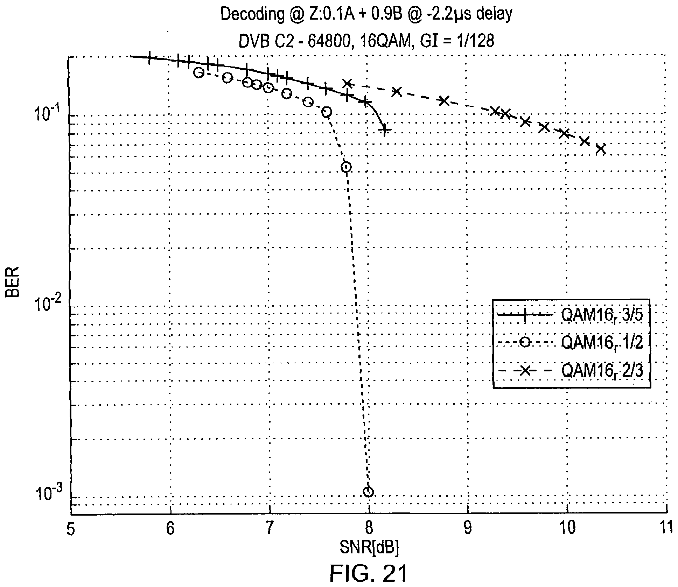

Figure 21 is a graphical plot of bit error rate with respect to signal to noise ratio for example of a LDPC coded OFDM transmitter-receiver chain, with error correction encoding of rate ½, 3/5 and 2/3, a first modulation scheme of 16QAM, a second modulation scheme of 64QAM and in which the receiver is considered to be located within coverage area of cell B and to receive OFDM symbols with 10% of signal power from base station A and 90% from base station B with the signal from A arriving at the receiver 2.2$\mu$s after the signal from base station B as illustrated by the example diagram shown in Figure 6;

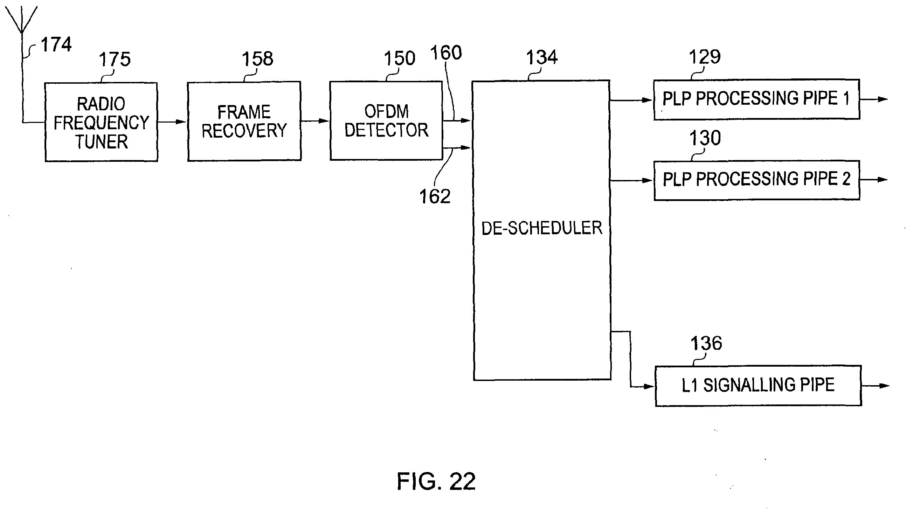

Figure 22 is a schematic block diagram of a receiver according to an embodiment of the present technique;

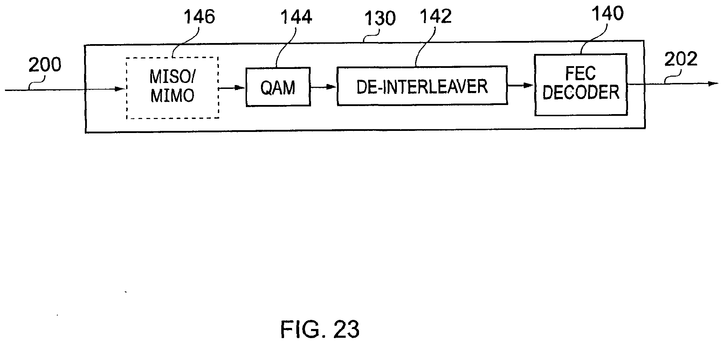

Figure 23 is a schematic block diagram of a Physical Layer Pipe (PLP) processor which appears in the receiver shown in Figure 22;

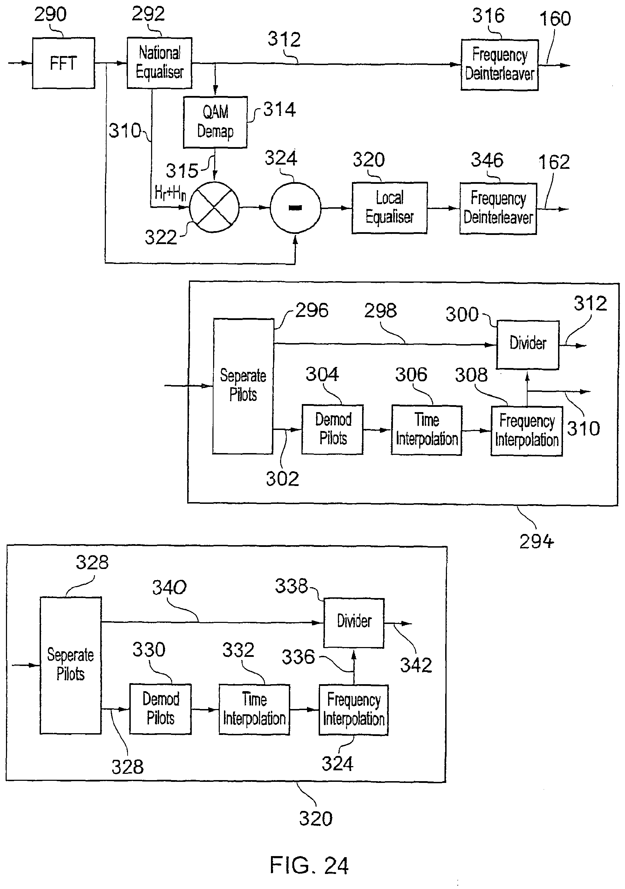

Figure 24 is a schematic block diagram illustrating a receiver adapted in accordance with a further example embodiment of the present invention; and

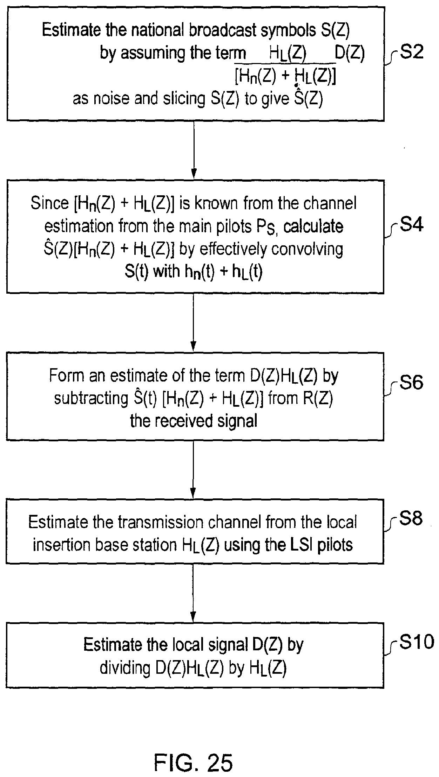

Figure 25 is a flow diagram illustrating an example operation of a process required to equalise a single frequency signal which includes components from a first and a second modulation scheme.

## Description of Example Embodiments

As set out above embodiments of the present invention seek to provide, in one application, an arrangement in which local content can be transmitted within a single frequency network whilst allowing other parts of the network still to receive a primary broadcast signal. One example illustration is where local content is required to be broadcast contemporaneously with a national broadcast television programme.

Figure 1 provides an example illustration of a network of base stations BS which are transmitting, via transmit antennas 1, a signal in accordance with a commonly modulated OFDM signal. The base stations BS are disposed throughout a geographical area within a boundary 2, which may be, in one example, a national boundary. As explained above in a single frequency network configuration the base stations BS are all broadcasting the same OFDM signal at the same time on the same frequency. Mobile devices M may receive the OFDM signal from any of the base stations. More particularly, the mobile devices M may also receive the same signal from other base stations because the signal is simultaneously broadcast from all of the base stations within the area identified by boundary 2. This so-called transmit diversity arrangement is typical of a single frequency OFDM network. As part of the detection of the OFDM signals in a receiver which is recovering data from OFDM symbols, energy from the transmitted OFDM symbols which is received for each symbol from different sources is combined in the detection process. Thus transmitting the same signal from different base stations can improve the likelihood of correctly recovering the data communicated by the OFDM symbols, provided that any component of the received OFDM symbol or echo of that OFDM symbol falls within a total guard interval period allowed for the network deployment.

As shown in Figure 1, in some examples the base stations BS may be controlled by one or more base station controllers BSC, which may control the operation of the base stations. In some examples the base station controllers BSC may control one or more of the base stations within a part of the network associated with a geographical area. In other examples the base station controllers BSC may control one or more clusters of base stations so that the transmission of local content is arranged with respect to a time division multiplexed frames.

As mentioned above, the area identified by the boundary 2 could correspond to a national boundary so that the network of base stations is a national network. As such, in one example the television signals broadcast nationally are each transmitted from the base stations BS shown in Figure 1. However embodiments of the present technique are aimed at addressing a technical problem associated with providing an arrangement for transmitting locally broadcast signals from some of the base stations shown in Figure 1 but not others. An example of such an arrangement might be if local broadcast news or traffic news which is associated with a particular area is broadcast from some of the base stations but not others. In a multi-frequency network this is trivial, because the signals for the local broadcast maybe transmitted from different transmitters on different frequencies and therefore detected independently of what is broadcast from other base stations. However in a single frequency network a technique must be provided in order to allow for local service insertion of content for some of the base stations but not others.

As mentioned above prior art document US 2008/0159186 discloses a technique for combining two modulation schemes to form a modulation layer for each of a plurality of data sources. A transmitter which is implementing such an arrangement is shown in Figure 2. In Figure 2 data is fed from a first data pipe 4 and second data pipe 6 to a modulator 8, which modulates the data onto the sub-carriers to form an OFDM symbol. The modulation is performed in such a way that the data from the first data pipe 4 can be detected separately from the detection of the data from both the first and the second data pipes 4, 6. An OFDM symbol former 10 then forms the OFDM symbol in the frequency domain as provided at the output of the modulator 8 and converts the frequency domain OFDM symbol into the time domain by performing an inverse Fourier transform in accordance with a conventional operation of an OFDM modulator/transmitter. The time domain OFDM symbols are then fed to a radio frequency modulator 12 which up converts the OFDM symbols onto a radio frequency carrier signal so that the OFDM signal may be transmitted from an antenna 14.

The technique disclosed in US 2008/0159186 is illustrated in Figures 3a and 3b. Figures 3a and 3b provide an illustration of signal constellation points in the complex plane comprising in-phase I and Quadrature-phase Q components. The example signal constellation points shown in Figure 3a is for QPSK, whereas the example shown in Figure 3b is for 16QAM. In accordance with the known technique for obtaining multi-layer modulation, data from two sources is modulated onto the signal constellation points of a second modulation scheme. The signal constellation points of the second modulation scheme represent the possible modulation symbol values available for the modulation scheme. For the first modulation scheme shown in Figure 3a, the signal constellation points for QPSK are provided as small circles "o" 20. As such the bits from a source B that is provided from the source data pipe 6 are mapped onto the signal constellation points as shown in Figure 3a, so that each possible modulation symbol value represents two bits from the source b0b1 in conventional manner using Grey coding for example.

The second modulation scheme shown in Figure 3b is 16QAM, which provides 16 possible signal constellation points 22 represented as "x". In addition to the modulation of the signal by data from the first data pipe 6, which is shown as b0b1 a selection of one of the constellation points from each of the four quadrants shown in Figure 3b also identifies one of the four possible values for two bits from the second source data pipe 4 for the values a0a1. Thus detection of one of the signal points shown in Figure 3b will not only identify a value for a0a1, but also a value for b0b1 depending upon which of the four quadrants from which the signal point is detected. Accordingly, a mutli-layer modulation scheme can be made.

## Transmitter

Embodiments of the present technique provide an arrangement which utilises the multi-layer modulation technique according to US 2008/0159186 to provide a local broadcast service for local content whilst still allowing base stations in neighbouring areas to detect a national broadcast signal.

A transmitter embodying the present technique, which might be used to insert local content at one of the base stations shown in Figure 1 is shown in Figure 4. In Figure 4 a plurality n of Physical Layer data Pipes (PLP) 30 are arranged to feed data for transmission to a scheduler 34. A signalling data processing pipe 36 is also provided. Within each of the pipes the data is received for a particular channel from an input 38 at a forward error correction encoder 40 which is arranged to encode the data, for example, in accordance with a Low Density Parity Check (LDPC) code. The encoded data symbols are then feed into an interleaver 42 which interleaves the encoded data symbols in order to improve the performance of the LDPC code used by the encoder 40.

The scheduler 34 then combines each of the modulation symbols from each of the data pipes 30 as well as the signalling processing pipe 36 into data frames for mapping onto OFDM symbols. The scheduled data is presented to a data slice processing unit 50, 51 which includes a frequency interleaver 54, a local pilot generator 180, a modulator 44 an optional MISO processing unit 184 and a pilot generator 56. The data slice processor arranges the data for a given PLP in such a manner so that it will occupy only certain sub-carriers of the OFDM symbol. The data output from the data slice processors 50, 51 is then fed to a Time Division Multiple Access (TDMA) framing unit 58. The output of the TDMA framing unit 58 feeds an OFDM modulator 70 which generates the OFDM symbols in the time domain which are then modulated onto a radio frequency carrier signal by an RF modulator and then fed to an antenna for transmission.

As explained above, embodiments of the present invention provide a technique for allowing for local content to be broadcast from one or more base stations within a local area relating to a national area covered by the network shown in Figure 1. To this end, the transmitter shown in Figure 4 also includes a local service insertion data slice processor 80 which includes a frequency interleaver 54 and a local pilot generator 180,. However, in addition, according to the present technique, the modulator 44 shown in the data slice processor 50 has a second input for receiving the data from the local service insertion data slice processor 80. According to the present technique the modulator 44 modulates the local service insertion data onto a related set of signal constellation points according to a second modulation scheme. The signal constellation points of the second modulation scheme, which is used for the local content as well as the primary data, are related to constellation points of the first modulation scheme which is used for just communicating the primary data from the PLP pipe n as will be explained with reference to Figures 5 and 6.

As shown in Figure 4 the modulator 44 has a first input 82 which receives data from the data slice processor 50 and a second input 84 which receives data from the local service insertion data slice processor 80. In the following description the data from the data slice processor 50, will be referred to as the first or primary data pipe. In one example the data from the first data data slice processor 50 carries a national broadcast channel, which would be communicated throughout the entire network of Figure 1.

The modulator 44 is shown in more detail in Figure 5. As shown in Figure 5 the data from the local service insertion pipe 80 is fed from the second input 84 into a first data word former 90. The data from the first data pipe is fed from the first input 82 into a second data word former 92. The data from the first data pipe when received in the data word former 92 is arranged to form four groups of bits y0y1y2y3 for mapping onto one of 16 possible values of a 16QAM modulation symbol within a symbol selector 94. Similarly, the data word former 90 forms the data from the first data pipe 82 into data words comprising four bits y0y1y2y3. However, the data word former 90 also receives the data symbols from the local service insertion pipe 80 and so appends two of the bits from the local service insertion data pipe 84 to the data bits from the first data pipe 82 to form a six bit data word y0y1y2y3h0h1, which is four bits y0y1y2y3 from the symbol stream from the first data pipe 32 and two bits h0h1 from the local service insertion pipe 80, thus forming a six bit word for selecting one of 64 possible modulation symbol values of 64QAM ($2^6$ = 64).

A symbol selector 96 is arranged to receive the six bit word y0y1y2y3h0h1 and in accordance with the value of that word select one of the 64 possible values of the 64QAM modulation scheme to form at an output 96.1 a stream of 64QAM symbols. The respective outputs from the symbol selectors 94, 96 are then fed to a switch unit 98 which also receives on a control input 100 an indication as to when the local content received from the local service insertion pipe 90 is present and is to be broadcast from the base station. If the local service insertion data is to be broadcast from the base station then the switch 98 is arranged to select the output 96.1 from the 64QAM symbol selector 96. If not then the switch is arranged to select the output 94.1 from the 16QAM symbol selector 94. Modulation symbols are therefore output from the modulator 44 for transmission on the OFDM symbols on an output channel 102.

The control input 100 may provide, in some examples, a control signal which indicates when local content is being transmitted from the local service insertion data slice processor 80. The control signal provided in the control input 100, may be generated from a base station controller to which the transmitter within the base station is connected.

In other examples the signalling data processing pipe 36 may be arranged to communicate via L1 signalling data an indication to when the local service insertion pipe 80 is or will be transmitting the local data. Thus a receiver may recover may detect and recover the L1 signalling data and determine when or whether the local content is being or will be transmitted. Alternatively, the receiver may be provided with a data providing a schedule of when the local content data is to be transmitted, by some other means, such as by pre-programming the receiver.

**Deployment of Base Stations**

Figure 6 provides an example illustration of an arrangement which may be produced within Figure 1 in which a first base station BS 110 may transmit data from the first data pipe 32 within a cell A, whereas a neighbouring base station BS 112 transmits data within a second cell B, the transmitted data including data from the first data pipe 32 but also the local service insertion data from the local service insertion pipe 80. Thus the base station 110 from the cell A is transmitting an OFDM symbol with sub-carriers modulated using 16QAM whereas the base station 112 from the cell B is transmitting the OFDM symbols by modulating sub-carriers with 64QAM. Thus as shown in Figure 6 as the bit ordering shows, the final two bits h0h1 are used to select a finer detail of a signal constellation point according to 64QAM whereas the bits y0y1y2y3 are used to select one of the 16QAM symbols in a coarser grid within the complex plane.

As already explained, both of the base stations 110, 112, within the cells A and B will be transmitting the OFDM symbols contemporaneously on the same frequency. As such a receiver in a mobile terminal will receive a combined OFDM signal as if, in part, the signal was being received via different paths in a multi-path environment. However, the OFDM signal transmitted from base station 110 within cell A comprises OFDM symbols modulated using the first modulation scheme 16QAM whereas the OFDM symbols transmitted from the base station 112 within cell B will be modulated using the second modulation scheme 64QAM. At the receiver within the mobile terminal, a proportion of the total power with which the OFDM symbols are received with the first modulation scheme and the second modulation scheme will depend on the proximity of a mobile device M to each of the transmitters within the cells A and B. Furthermore, the likelihood of correctly recovering the data symbols from the first data pipe and the local service insertion pipe will depend on the extent to which the receiver can detect OFDM symbols according to the first modulation scheme 16QAM transmitted from cell A or OFDM symbols according to 64QAM transmitted from cell B in the presence of OFDM signals modulated with the second and the first modulation schemes respectively.

As shown in Figure 7 three plots 120, 122, 124 of possible simulated signal constellation values are shown for an example of 16QAM and 64QAM which are shown for example in Figure 8. The first left hand plot 120 provides a plot in the complex plane of received modulation symbol values when the transmitters in the base stations 110, 112 of cells A and B are transmitting OFDM symbols with sub-carriers modulated with 16QAM and 64QAM modulation schemes respectively, because cell B is transmitting local service insertion data. The first plot 120 corresponds to a mobile device being at position X for which it is assumed that 80% of the received signal power is from cell A and 20% of the received signal power is from cell B. As can be seen in Figure 7 the plot 120 provides discrete signal points in accordance with a 16QAM received signal, but with an apparent increase in noise as a result of a spread of possible points caused by the 20% power coming from the cell B which is transmitting 64QAM modulation symbols.

Correspondingly, a middle plot 122 provides a plot of signal values in the complex plane when the receiver is at position Y and for which it is assumed that 60% of the received power is from cell A and 40% of the received power is from cell B. As can be seen, although the signal constellation plots are grouped into clusters corresponding to an association with each of the possible values of a 16QAM symbol, discrete constellation points have been formed in accordance with a 64QAM modulation scheme. Thus it will be appreciated that if the signal to noise ratio is high enough then a receiver at position Y can detect one of the 64QAM signal points and therefore recover the local inserted data. Correspondingly, a right hand plot 124 illustrates the case at position Z, for which it is assumed, for example, that only 10% of the signal power comes from the cell A and 90% of the signal power comes from cell B. Therefore, as shown in the plot 124, clearly each of the 64QAM signal constellation points are available for detecting and recovering data, which is produced for both the first data pipe and the local service insertion data pipe. Accordingly, it will be appreciated that depending on the position of the receiver, a mobile terminal can recover the locally transmitted data and the data transmitted from the first data pipe (for example the national broadcast) when in or around cell B, whereas in cell A a receiver will still be able to recover the data from the first data pipe. Therefore an effect of using the layered modulation provided by the second modulation scheme of a 64QAM signal and the first modulation scheme 16QAM will not disrupt the reception of the nationally broadcast data when locally broadcast data is transmitted from a neighbouring cell.

## TDMA Local Service Insertion

A further enhancement which some embodiments of the present technique may use is to distribute the capacity for local service transmission between a cluster of neighbouring cells to the effect that the local content transmitted using the higher order (second) modulation scheme is transmitted at different times in different cells. This technique is illustrated with reference to Figures 9a, 9b and 9c.

In Figure 9a a cluster of four cells is shown. These are shown with different grades of shading and are labelled respectively Tx1, Tx2, Tx3, Tx4. Thus Figure 9a illustrates a cluster of four cells. As will be appreciated in addition to receiving the data from the first data pipe, which may be for example the national broadcast channel, a regional broadcast may also be provided using the local data insertion pipe in combination with the higher order hierarchal modulation technique as explained above. However as explained above when the second or higher order modulation technique is being used, the effect is to introduce noise or interference which reduces the signal to noise ratio for receivers receiving the data from the first communications channel that is the national broadcast using the first or lower order modulation scheme. More specifically, for example, if the national broadcast signal from the first data pipe is modulated using QPSK and the combined first communications channel and the local service insertion channel are modulated onto the second or higher order modulation scheme of 16QAM then the 16QAM broadcast will appear as an increase in noise for a receiver trying to receive the OFDM symbols modulated with the QPSK modulation scheme.

In order to reduce the amount of interference caused by the second/higher order modulation scheme (16QAM) with respect to the first/lower order modulation scheme (QPSK) the cells which broadcast the OFDM signals are clustered as shown in Figure 9a. Furthermore the transmitters within the four cell cluster illustrated in Figure 9a take turns on a frame by frame basis to broadcast the higher order 16QAM modulation signal providing data symbols from the first data communications pipe and their local service insertion pipe. Such an arrangement is illustrated in Figure 9b.

In Figure 9b a TDMA frame composed of four physical layer frames is shown. The physical layer frames are labelled frame 1, frame 2, frame 3 and frame 4. Within each physical layer frame the OFDM signals are communicating data from various PLPs. As explained above contemporaneously with the transmission of the data for the first data pipe using QPSK, OFDM symbols carrying data from both the first data pipe and the local service insertion pipe are also transmitted using for example 16QAM. However in order to reduce the interference caused by the 16QAM modulation only one of transmitters Tx1, Tx2, Tx3, Tx4 within the cluster of four cells is allowed to transmit OFDM symbols with the higher order 16QAM modulated sub-carriers during each physical layer frame of the TDMA frames. Thus in physical layer frame 1, only Tx1 transmits the OFDM symbols with sub-carriers modulated with 16QAM to provide data from the combined first data pipe and its local service insertion pipe, whilst in frame 2 only transmitter Tx2 transmits the OFDM symbols with 16QAM, and thereafter TX3 in frame 3 and TX4 in frame 4. Then the pattern repeats for the next TDMA frame. In each case, all other transmitters are transmitting OFDM symbols modulated with QPSK or the constellation used for carrying only the first data pipe.

As a result of time dividing the transmission of the local service insertion data between each of the four transmitters Tx1, Tx2, Tx3, Tx4, effectively the local data rate is a quarter of that of the first data pipe. Thus each cell transmits local service insertion content every fourth physical layer frame. However correspondingly because the higher order modulation scheme is only transmitted from a cell once in every four frames, the effective interference experienced by receivers located in the coverage area of the four cells that wish to receive the first/lower order modulations scheme (QPSK) is correspondingly reduced. Thus in a pattern of cells illustrated in Figure 9c, the interference which is caused by the local service insertion data and would appear as increased noise to the receiver is distributed throughout the cluster of four cells. Therefore the relative interference or increasing noise caused by the local service insertion data is reduced. This can be considered to be the equivalent of frequency re-use in a multi frequency network. For the example illustrated in Figure 9a, 9b, 9c, the following table represents the transmission of OFDM symbols with each of the first (16QAM) and second (64QAM) modulation schemes:

|  | Frame 1 | Frame 2 | Frame 3 | Frame 4 |
|---|---|---|---|---|
| Tx1 | 64QAM | 16QAM | 16QAM | 16QAM |
| Tx2 | 16QAM | 64QAM | 16QAM | 16AM |

(continued)

|  | Frame 1 | Frame 2 | Frame 3 | Frame 4 |
|---|---|---|---|---|
| Tx3 | 16QAM | 16QAM | 64QAM | 16QAM |
| Tx4 | 16QAM | 16QAM | 16QAM | 64QAM |

Table illustrating the modulation of OFDM symbols, when the local service insertion data is modulated using a second/higher modulation scheme of 64QAM and the first/lower order modulation scheme is 16QAM for carrying data symbols from the first/national data pipe.

As will be appreciated, a result of allocating the transmission of the local content over a cluster of four TDMA frames between a cluster of four base stations, may be to reduce the bandwidth for the local content service by one quarter, if a receiver is only able to receive the OFDM carrying signal from one base station only, which will typically be the case. The allocation of the local content to the transmitter of the base station in each cluster may be provided for example via signalling data provided by the signalling data pipe.

Although in the example provided above the cells are clustered into groups of four, it will be appreciated that any number can be used. Advantageously the cells are grouped into clusters of four to provide a balanced trade-off between an amount of baseband bandwidth (bit rate) afforded to the local service insertion service and an amount of reduction in the signal to noise ratio caused to the reception of data from the first data pipe using the lower order modulation scheme by the transmission of the higher order modulation scheme carrying data from both the first data pipe and the local service insertion channel. As such a cell structure shown in Figure 9c can be used to transmit local content every fourth physical layer frame for a different group of four cells and the arrangement of the cell clustering repeated throughout to represent an equivalent arrangement of frequency re-use.

According to the present technique the transmitter within the base stations shown in Figure 4 may be adapted to implement the TDMA frame structure illustrated above. In one example, the scheduler 34 for forming the modulated sub-carrier signals into the OFDM symbols and a framing unit 58 may be arranged to schedule the transmission of the OFDM symbols according to the time divided frame illustrated in Figure 9b. The scheduler 34 and the framing unit 58 are arranged to transmit OFDM symbols which are carrying data symbols from both the first data pipe and the local service insertion pipe using the second modulation scheme as illustrated in the table above.

**Equalisation of Combined Local Service Insertion and National Broadcast Signals**

A further aspect of the present technique will now be described with reference to Figures 10 to 15. As explained above, data from a local service insertion channel is transmitted with data from a national broadcast channel using a higher order modulation scheme such as 16QAM, whereas data from the national broadcast channel is transmitted using a lower order modulation scheme such as QPSK. A mobile receiver which is able to detect the local service insertion data which is conveyed with the data from the national broadcast channel by a 16QAM modulation scheme may be required to detect the 16QAM signal in the presence of a QPSK signal, which conveys data from the national broadcast channel only. The 16QAM modulation scheme conveying data from the national broadcast channel and the local broadcast channel and the QPSK modulation scheme conveying the national broadcast channel are represented in Figure 3a and 3b and described above. In the following description the higher order modulation scheme which is conveying data according to the national broadcast channel and the local service insertion channel will be referred to as the local service insertion channel or data and the national broadcast channel will be referred as the national broadcast channel, data or signal.

A further ancillary problem addressed by an embodiment of the present technique is to provide a receiver which can equalise a signal received at the receiver which is a combination of the local service insertion signal that is the 16QAM signal and the national broadcast signal that is the QPSK signal for example. Equalising a signal which is a combination of a national broadcast signal and a local service insertion signal, which is a combination of a 16QAM and a QPSK signal is therefore addressed by a further aspect of the present technique.

As shown in Figure 10 a mobile receiver M is located at a position approximately equi-distant from the base station transmitting the local service insertion signal 112 and a base station transmitting the national broadcast signal 110. Thus the signal received by the mobile receiver M is comprised of a combination of the local service insertion signal $s(t)+d(t)$ convolved with the channel $h_l(t)$ between the local service insertion base station 112 and the mobile receiver M and the national broadcast signal $s(t)$ convolved with a channel $h_n(t)$ from the national broadcast base station 110 and the mobile receiver M. Thus the received signal $r(t)$ is represented by the following equation (where the symbol '*' represents convolution):

$$\mathrm{r(t)} = h_n(t){}^*s(t) + h_l(t){}^*[s(t) + d(t)]$$

$$= s(t){}^*[h_n(t) + h_l(t)] + d(t){}^* h_l(t)$$

Following an FFT in which the received signal is transformed into the frequency domain, the signal formed at the output of the FFT is:

$$R(z) = S(z)[H_n(z) + H_l(z)] + D(z)H_l(z)$$

A signal constellation therefore can be represented in the complex plane for the national broadcast signal as shown in Figure 11a, and the local insertion signal as shown in Figure 11b; the national broadcast signal being QPSK as shown in Figure 11a and the local service insertion signal being 16QAM shown in Figure 11b. Thus the national broadcast signal of Figure 11a provides a lower order modulation scheme with respect to the higher order modulation scheme of 16 QAM shown in Figure 11b. However, the representation of the signals shown by the constellation points of Figure 11a and 11b are without noise and moreover, without the presence of either of the other signals.

Figure 12a and 12b provide a corresponding representation of the signal constellation in the complex plane where the mobile receiver M receives a signal in the presence of both the national broadcast signal $s(t)$ and the locally broadcast signal $s(t)+d(t)$ and where the channel responses $H_n(z)$ and $H_l(z)$ are not equal. In Figure 12a the signal consolation $R(Z)$ for the combined signal as expressed above is a combination of the national broadcast signal and the local broadcast signal. Figure 12b shows the effect of dividing the received signal R(z) by $[H_n(z) + H_l(z)]$ which is a combination of the channels from the base station of the national broadcast signal 110 and the channel of the local insertion base station 112, to produce $C(z)$. The diagram in Figure 12b is assuming perfect channel estimation and without noise. As can be seen from Figure 12b only a small amount of noise will be required in order to cause a false detection of a particular modulation symbol of the local broadcast signal. The division of $R(z)$ by the combined channel forms an equalised signal $C(z)$:

$$C(z) = \frac{R(z)}{\left[H_n(z) + H_l(z)\right]}$$

$$= S(z) + \frac{H_l(z)}{\left[H_n(z) + H_l(z)\right]}D(z)$$

However we do not know $H_n(z)$ and $H_l(z)$ separately, and so the following cannot be computed:

$$\frac{H_l(z)}{[H_n(z) + H_l(z)]}$$

According to the present technique in order to recover the local insertion signal from the national broadcast signal, it is necessary to determine the channel $H_n(z)$ from the national base station 110 and the channel $H_l(z)$ from the local service insertion base station 112 separately. With knowledge of the national broadcast channel $H_n(z)$ and the local insertion channel $H_l(z)$ it would be possible to compute the term $D(z)$. Thus, first detecting the national broadcast signal using the lower order modulation scheme and subtracting the detected signal from the received signal it is then possible with knowledge of the channels from the national broadcast base station $H_n(z)$ and the local service insertion signal base station $H_l(z)$ to recover the local signal $D(z)$. Thus, according to the present technique the term $H_l(z)D(z)/[H_n(z)+ H_l(z)]$ is treated as noise and the national broadcast data is recovered by slicing $S(z)$ to give an estimate of the national broadcast signal $\hat{S}(z)$. Accordingly, by calculating the channels from the national broadcast base station $H_n(z)$ and the local service insertion signal base station $H_l(z)$ and convolving the sum of these with the estimate of the national broadcast signal (by multiplication in the frequency domain) it is possible to subtract this combination from the received signal to form an estimate of the local service insertion signal convolved with the channel from the local service insertion base station.

Therefore to detect the local service insertion signal, the following steps are required:

1. Estimate $S(z)$ as $\hat{S}(z)$ by considering

$$\frac{H_l(z)}{[H_n(z)+ H_l(z)]} D(z)$$

as noise when slicing $S(z)$;

2. The equaliser has already computed $[H_n(z) + H_l(z)]$ as the combined channel;

3. Compute $D(z)H_l(z) \approx R(z) - \hat{S}(z)[H_n(z) + H_l(z)]$; which provides a complex signal as shown in the complex plane diagram in Figure 13a;

4. If some of the $D(z)$ are known from additional pilots provided in the local service insertion signal, then $H_l(z)$ can be estimated to give $\hat{H}_l(z)$

$$\hat{H}_l(z) \approx \frac{R(z) - \hat{S}(z)[H_n(z) + H_l(z)]}{D(z)}$$

5.

6. Interpolation can be performed on $\hat{H}_l(z)$ in the frequency direction to form $H_l(z)$ and so

$$\tilde{D}(z) \approx \frac{R(z) - \hat{S}(z)[H_n(z) + H_l(z)]}{\hat{H}_l(z)}$$

7.

Thus, by cancelling the channel from the local service insertion base station $\hat{H}_l(z)$, a signal constellation diagram shown in Figure 13b is formed from which the local service insertion data $\tilde{D}(z)$ can be recovered.

As will be appreciated from the above explanation in order to recover the local service insertion signal $\tilde{D}(z)$ it is necessary to estimate the local service insertion channel $\hat{H}_l(z)$ from the local service insertion base station which is separate from the channel from the national broadcast base station $H_n(z)$.

In a further embodiment, the computed $\tilde{D}(z)$ can be used to get a better estimate of $\hat{S}(z)$ by computing the following:

$$R(z) - D(z)H_l(z) = S(z)[H_n(z) + H_l(z)]$$

Then divide each side by $[H_n(z) + H_l(z)]$ and slice again for $\hat{S}(z)$. This kind f iteration may be continued many times to get a continuous improvement in the estimate of $\tilde{D}(z)$.

According to the present technique the channel from the local service insertion base station $H_l(z)$ is estimated by including local service insertion pilot symbols on selected sub-carriers which are transmitting the local service insertion modulation symbols. Such an arrangement is shown in Figure 14a, 14b and 14c.

In Figure 14a an illustrative representation of an OFDM symbol in the frequency domain is provided showing a plurality of subcarriers which are then designated for conveying data according to the nation broadcast signal $s(t)$ and subcarriers which are dedicated to transmitting pilot symbols $Ps$ in accordance with a conventional arrangement. Figure 14b provides an illustration of an OFDM symbol in which local service insertion symbols are introduced on top of the nation broadcasting symbols using the hierarchical modulation scheme. However, in order to estimate the channel via which the local service insertion symbol is broadcast, it is necessary to select some of the subcarriers which are carrying data according to the local service insertion and replace these symbols with known symbols which will act as pilot symbols $Pd$. Such an arrangement is shown in Figure 14c. Accordingly, it will be appreciated that the local service insertion pilots $Pd$ can be transmitted in place of symbols which would be transmitted on subcarriers with higher order modulation symbols which would be arranged to carry the local service insertion data but arranging for these to be replaced by known symbols. Therefore these sub-carriers can convey a known symbol for the higher order modulation which can act as a pilot $Pd$. However, as will be appreciated in order to transmit the local service insertion signal pilots $Pd$. it is necessary to accommodate the frequency interleaving which would be required for a conventional transmission of the local service insertion data.

As shown in Figure 4, according to the present technique at the output of the frequency interleaver 54 for each data slice processor 50, 51, the data slice processors 50, 51 which include local service insertion data include a block 182 for inserting the local service insertion pilots $Pd$ before generating the hierarchical modulation symbols as formed by the modulators shown in Figure 4. The modulators 182 are arranged to map the data symbols onto modulation symbols in accordance with the hierarchical modulation scheme being used. Optionally, where a multiple input signal output (MISO) scheme is being employed then further processing of the pilots is performed as illustrated by the MISO block 184. Following the MISO block 184, the pilot symbols are inserted on separate pilot subcarriers via the main pilot insertion unit 56 following which the framing unit 58 forms the OFDM symbols in the frequency domain in a combination with the OFDM block 70.

As shown in Figure 4 at the output of the frequency interleaver 54 in a branch of the signal insertion data slicer processor, the local service insertion data which is produced after the frequency interleaver 54 is fed to the local pilots insertion block 180 in which the data symbols for the local service insertion are replaced by the pilot symbols either by puncturing or for example where the modulation symbols which are to be used to carry the local service insertion of pilots are left vacant between data cells or are moved to accommodate the local service insertion pilots. As will be appreciated the local service insertion pilots $Pd$ are predesignated and so can either be reserved for local service insertion pilots or the data can be moved to accommodate the local service insertion pilots. Thus, the arrangement substantially as represented in Figure 14c is produced at the output of the QAM modulator 182.

Figure 15 provides a schematic block diagram which corresponds to the schematic block diagram shown in Figure 4 except that Figure 15 provides an example in which a multiple-input multiple-output (MIMO) transmission scheme is being used. However, a complication with the arrangement for a MIMO scheme is that the local service insertion pilots $Pd$, which are formed as part of the hierarchical modulation structure must be inserted before the frequency interleaver 192. This is because for a MIMO scheme, the pilots on each version of the OFDM signal to be transmitted are adapted with respect to each other and so each of the versions must be formed separately for each version. This applies for both the national broadcast modulation symbols and also the local service insertion symbols. Accordingly, it is not possible to combine the local service insertion pilots at the output of the frequency interleaver 54.

According to the present technique, in order to accommodate an arrangement in which the local service insertion pilots are formed in the signal before the frequency interleaver 54 then the local service insertion pilots are arranged with respect to the subcarriers which are conveying the hierarchical modulated data in a block 190 which is then fed to a frequency de-interleaver 192 which performs an inverse of the interleaving performed by the frequency interleaver 54. Thus, the pilot sub-carriers which include the local service insertion pilots $Pd$ are arranged at their desired position and the frequency de-interleaver, de-interleaves these modulation symbols before the local service insertion data is applied by a local service insertion data block 194. At the output of the QAM modulator 182, the modulation symbols are formed and fed to a MIMO block 184. The frequency interleaver 54 then performs a mapping which is a reverse of the de-interleaver mapping performed by the frequency de-interleaver 192 so that at the output of the frequency interleaver 54, the local service insertion pilots are once again at the desired location on the designated sub-carriers for the local service insertion pilots. Accordingly, OFDM symbols are formed with the local service insertion pilots $Pd$ at their desired location. The main pilots $Ps$ for the national broadcast signal are then added at the sub-carrier positions concerned via the main pilot insertion block 56 before the framing unit 58 and the OFDM unit 70 form the OFDM symbols as per a conventional arrangement.

Thus, according to the present technique the local service insertion pilots $Pd$ are arranged at the desired location by first arranging for them to be disposed at their desired location and then forming an inverse of the interleaving using a de-interleaver so that when interleaved they are once again arranged at their desired location.

A received architecture which is arranged to recover the local service insertion data or the national broadcast data is described below with reference to Figure 24.

## Results

Various results are provided in Figures 16 to 21 for example transmitter-receiver chains operating with different forward error correction encoding rates of rate ½, 3/5, 2/3 and ¾, and for a first modulation scheme of 16QAM, a second modulation scheme of 64QAM. Figures 16, 17, 18, 19, 20 and 21 provide examples for different ratios of the power from cell A and cell B. For Figure 16 the fraction of the power of the received signal from cell A is 99% and 1% from cell B. The relative delay between time of arrival from cells A and B is 4.375us. For Figure 16 80% of the power is from cell A and 20% is from cell B with a 2.2 $\mu$s delay in time of arrival from cell B. Figure 17 provides a 99% power from cell A and 1% of power from cell B at a 0 $\mu$s delay in relative time of arrival. Figure 18 shows 60% of power from cell A and 40% of power from cell B at a 0 $\mu$s relative delay and Figure 19 shows a 50% power from base station A and 50% power from cell B at a 0 $\mu$s relative delay. Finally, Figure 20 shows results in a situation where 10% of the power is from cell A and 90% is from cell B with the signal from cell A arriving the receiver 2.2 $\mu$s after the arrival of the signal from cell B.. As can be seen from the example in Figure 21 there is insufficient signal to noise ratio to decode the 3/5, 2/3 rate codes. The required SNR should be that enough for the decoding of 64QAM.With respect to each of the plots is shown a signal to noise ratio value which would correspond to a situation in which the transmitter for the same neighbouring cell was not transmitting the local service insertion data on the higher order modulation scheme 64QAM for this example. Where appropriate some of the plots include points for each of the respective coding rates of ½, 3/5, 2/3 and ¾ at a bit error rate of $10^{-7}$ as represented as a "◊". As shown in each case there is an increase in the signal to noise ratio required in order to reach the same bit error rate value.

However the performance of the scheme would still seem to be acceptable.

## Receiver

A receiver which may form part of a mobile device for receiving the signals broadcast by any of the base stations of the network shown in Figure 1 will now be described. An example architecture for a receiver for receiving any of the transmitted PLP pipes shown in Figure 4 is provided in Figure 22. In Figure 22 a receiver antenna 174 detects the broadcast radio frequency signal carrying the OFDM signals which are fed to a radio frequency tuner 175 for demodulation and analogue to digital conversion of a time domain base band signal. A frame recovery processor 158 recovers time division multiplex physical layer frame boundaries and OFDM symbol boundaries and feeds each of the symbols for each of each physical layer frame to an OFDM detector 150. The OFDM detector 150 then recovers the national broadcast data and local service insertion data from the OFDM symbols in the frequency domain. The recovered national broadcast data and local service insertion data is then fed to a de-scheduler 134 which divides each of these symbols into the respectively multiplexed PLP processing pipes. Thus the de-scheduler reverses the multiplexing of applied by the scheduler 134 shown in Figure 4 to form a plurality of data streams, which are fed respectively to PLP processing pipes 129, 130, 136. A typical receiver would have only a single PLP processing pipe as each PLP may carry a full broadcast service and this PLP processing pipe processes the data from any nation broadcast PLP or any local service insertion PLP. The processing elements forming part of the PLP processing pipes shown in Figure 22 is shown in Figure 23.

In Figure 23 the first example PLP processing pipe 130 is shown to include a QAM demodulator 144, a de-interleaver 142 and a forward error correction decoder 140 which are arranged to substantially reverse the operations of the QAM modulator 44, the interleaver 42 and the FEC encoder 40 of Figure 4. Optionally, the PLP processing pipe 130 may also include a MISO/MIMO detector 46 for performing multiple input multiple output or multiple input signal output processing. In operation therefore modulation symbols are received at an input 200 and fed to the MISO/MIMO processor 146 whose role is to decode the space-time code that was used at the transmitter thereby producing one stream of modulation symbols into a signal symbol stream which are then fed to the QAM demodulator 144. The QAM demodulator detects one of the constellation points in the QAM modulation scheme used and for each detected point recovers a data word corresponding to that point. Thus the output of the QAM demodulator 144 is a data symbol stream which is fed to the de-interleaver 142 for de-interleaving the data stream from a plurality of OFDM symbols or from within an OFDM symbol.

Since the data symbols have been encoded in the transmitter shown in Figure 4, for example, using a low density parity check code, the symbols are decoded by the FEC decoder 140 to form at an output 202 base band data stream for the PLP.

In accordance with the present technique in some embodiments, the de-scheduler 150 is arranged to apply the TDMA frame in accordance with a cluster of base stations described above to recover OFDM symbols which have been modulated with the second modulation scheme and transmitted on one of the physical layer frames. Thus in accordance with the signal transmission arranged for the cell cluster the receiver times the recovery of the OFDM symbols with sub-carriers modulated in accordance with the second modulation scheme in accordance with the frame timing applied by the transmitter in the base station. The information as to which physical layer frames carry hierarchical modulation for the given PLP is carried in the signalling PLP which the receiver first receives and decodes before any payload carrying PLP.

## Equalising Received Single Frequency Signal

Figure 24 provides a representation of a schematic block diagram of the OFDM detector 150 as shown in Figure 22. This can be used for a SISO, MISO or MIMO scheme. In Figure 24 a Fast Fourier Transform FFT block 290 converts the received signal from a time domain into the frequency domain. A national broadcast signal equaliser 292 then receives the frequency domain OFDM symbols and forms an estimate of the combined local service insertion channel and the national broadcast channel as well as the received nation broadcast data. Blocks which make up the single frequency network equaliser 292 are shown in an expanded area 294. As shown in the expanded area 294 the single frequency network equaliser comprises a pilot separator 296 which separates the pilots from the received frequency domain signal. The frequency domain signal is fed at an output 298 of the pilot separator 296 to a divider unit 300. From a second output 302 of the separator 296 the pilot sub-carriers are demodulated, interpolated in time by a time interpolation unit 304 and interpolated in frequency by a frequency interpolation unit 308 to form at an input 310 to the divider 300 an estimate of the combined national broadcast channel and the local service insertion channel so that the output of the divider forms a signal representative of the national broadcast signal $S(z)$ 312.

As shown in the receiver chain a de-mapper 314 then interprets the received modulation signals by slicing the modulations signalling about the real and imaginary plane to detect an estimate of the national broadcast signal $\hat{S}(z)$. The signal representative of the national broadcast signal $S(z)$ 312 is then fed to a frequency de-interleaver 316 and then to a de-scheduler 134 as explained above for a general data recovery of the national broadcast signal.

On a lower part of the receiver architecture, the detected combined local service insertion channel and national broadcast channel are fed on an output 311 to a first input of a local equaliser 320.

The estimate of the national broadcast symbols $\hat{S}(z)$ 315 is fed to a multiplier 322 which receives on a second input the estimate of the combined local service insertion channel and the national broadcast channel 310. A subtraction unit 324 then subtracts the multiplication of the estimate of the national broadcast symbols multiplied with the combined local service insertion and national broadcast channels from the received signal to form an estimate of the local service insertion symbols which are fed to a local equaliser 320. The internal structure of the local equaliser 320 is similar to that of the national broadcast signal equaliser. At the output of the local service insertion pilot separator 326 the pilot signals are fed on a output 328 to a pilot demodulator 330 and then to a time interpolation unit 332 followed by a frequency interpolation unit 334 which forms an estimate of the channel through which the local service insertion symbols have passed. The estimate of the local service insertion data is fed on an input 336 to divider 338 which receives on a further input from the pilot separator 326, 340 the local service insertion symbols and forms at an output 342 an estimate of the local service insertion data symbols. A de-mapper 344 and frequency de-interleaver 346, then form an estimate of the data representing the locally inserted data which is fed to the de-scheduler 134. Thereafter, the data recovery of the locally inserted data corresponds to that shown with respect to the data pipe shown in Figure 23.

As will be appreciated a further aspect of the present technique provides a first estimate of the national broadcast data, which is then refined, based on the determination of the local service insertion symbols to form a further refined estimate of the national broadcast symbols which may be further used to further calculate a refined estimate of the local service insertion symbols. Thus, an iterative feedback arrangement in the form of a turbo-demodulation can be formed to provide further improvements on the estimate of the received signals.

**Summary of Operation**

In summary the operation of the receiver shown in Figure 24 to recover the local data from the local service insertion symbols is illustrated by a flow diagram shown in Figure 25 which is summarised as follows:

S2: An estimate of the national broadcast symbols $\hat{S}(z)$ is formed by regarding the term

$$\frac{H_l(z)}{[H_n(z) + H_l(z)]} D(z)$$

as noise and slicing the recovered signal about the real and imaginary plane to form an estimate of the national broadcast data.
S4: An estimate of the combined channel which is the transmitting channel from the nation broadcast base station and the local service insertion base station is formed using the main pilot sub-carriers $Ps$ to calculate an estimate of a term representing the regenerated national broadcast signal convolved with the combined national broadcast and local service insertion channels $\hat{S}(z)[H_n(z) + H_l(z)]$.
S6: An estimate of the local service insertion symbols convolved with the local channel is formed by subtracting the generated term from step S4 from the received signal $R(z)$ $(D(z)H_l(z) \approx R(z) - \hat{S}(z)[H_n(z) + H_l(z)])$.
S8: An estimate of the channel through which the local service insertion has passed from the base station to the receiver $\hat{H}_l(z)$ is determined using the local service insertion pilots.
S10: The local service insertion data is then estimated from the symbols produced by dividing the recovered term by the estimate of the local channel

$$\tilde{D}(z) \approx \frac{R(z) - \hat{S}(z)[H_n(z) + H_l(z)]}{\hat{H}_l(z)}.$$

Various modifications maybe made to the present invention described above without departing from the scope of the present invention as defined in the appended claims. For example, other modulation schemes could be used other than those described above, with appropriate adjustments being made to the receiver. Furthermore, the demodulation process can be iterated as described above for a number of times to improve the received symbol estimates. Furthermore, the receiver could be used in various systems, which utilise OFDM modulation other than those defined according to the DVB-Hand-held standards.

**Claims**

1.  A communications system comprising
    a plurality of base stations (1) disposed throughout a geographical area for providing a facility for wireless communications with mobile devices within a radio coverage area provided by the base stations, each of the base stations including
    a transmitter for transmitting data via Orthogonal Frequency Division Multiplexed, OFDM, symbols on a common radio frequency carrier signal, the OFDM symbols including a plurality of sub-carrier signals formed in the frequency domain and modulated with the data to be communicated, the transmitter includes
    a modulator (8) arranged in operation
    to receive on a first input, data symbols from a first data pipe according to a first communications channel for transmission,
    to receive on a second input, data symbols from a local insertion data pipe according to a local communications channel for transmission, and to modulate the sub-carrier signals of the OFDM symbols with either the data symbols from the first data pipe or the data symbols from both the first data pipe and the local insertion pipe, the modulation of the sub-carrier signals of the OFDM symbols with the data symbols from the first data pipe being performed by mapping the data symbols according to a first modulation scheme (20), and the modulation of the sub-carrier signals of the OFDM symbols with the data symbols from the first data pipe and the local insertion pipe being performed by mapping the data symbols according to a second modulation scheme (22), and a radio frequency modulator which is arranged to modulate a radio frequency carrier signal with the OFDM symbols for transmission, wherein the first modulation scheme is a lower order modulation scheme providing first modulation symbols with values from a smaller number of constellation points in the complex plane than the second modulation scheme which is a higher order modulation scheme, the second modulation scheme providing second modulation symbols with values which are disposed in the complex plane about corresponding values of the first modulation scheme, with the effect that detection of one of the second modulation symbols of the second modulation scheme will provide data symbols from the local insertion pipe and/or the first data pipe and allow the detection of first modulation symbols from the first modulation scheme providing data symbols from the first data pipe, in the presence of modulation symbols from the second modulation scheme, thereby providing a plurality of modulation layers, **characterized by**, a first sub-set of one or more of the base stations (112) within the geographical area are arranged to transmit the data from the first data pipe and the local insertion pipe, when a second sub-set of one or more base stations (110) are arranged to transmit data from the first data pipe only, and the base stations from the first sub-set and the second sub-set are arranged to transmit on the common radio frequency carrier signal.

2.  A communications system as claimed in Claim 1, wherein the transmitter includes a scheduler for forming the modulated sub-carrier signals into the OFDM symbols and a framing unit for arranging the OFDM symbols for transmission according to a time division multiplexed frame, and wherein the scheduler and the framing unit are arranged to transmit OFDM symbols which are carrying data symbols from both the first data pipe and the local insertion pipe using the second modulation scheme in some time division multiplexed frames and not in other frames.

3.  A communications system as claimed in Claim 2, wherein the base stations are formed into clusters, each cluster including a predetermined number of the base stations, each base station in the cluster being assigned to one of a corresponding number of time division multiplexed frames, and the transmitter of the base station is arranged to transmit the OFDM symbols which are carrying data symbols from both the first data pipe and the local insertion pipe using the second modulation scheme in the time division multiplexed frame which has been assigned to that base station and not in other frames.

4.  A communications system as claimed in Claim 3, wherein the predetermined number of base stations in the cluster is determined in accordance with a base band bandwidth assigned to the local insertion pipe and an increase in noise caused by the transmission of the OFDM symbols carrying data symbols from both the first data pipe and the local insertion pipe using the second modulation scheme at receivers of mobile devices which are detecting and recovering data from OFDM symbols with sub-carriers modulated in accordance with the first modulation scheme.

5.  A communications system as claimed in any of Claims 2, 3 or 4, wherein the first data pipe includes an error correction encoder, which is arranged to encode the data symbols in accordance with an error correction code and an interleaver, which is arranged to communicate encoded data symbols which are proximate to each other on a plurality of the OFDM symbols, with the effect that noise produced by the transmission of OFDM symbols carrying data symbols from both the first data pipe and the local insertion pipe using the second modulation scheme is reduced after recovering the encoded data symbols at a receiver, de-interleaving and error correction decoding.

6.  A communications system as claimed in any of Claims 2 to 5, wherein the number of base stations in each cluster is four.

7.  A communications systems as claimed in any preceding claim, wherein the first modulation scheme is N-QAM and the second modulation second is M-QAM, where N < M and M/N is two or more.

8.  A communications system as claimed in any preceding claim, wherein the communications system is arranged to operate in accordance with a Digital Video Broadcasting Hand-held standard.

9.  A method of communicating using a plurality of base stations (1) disposed throughout a geographical area for providing a facility for wireless communications with mobile devices within a radio coverage area provided by the base stations, the method comprising

transmitting data via Orthogonal Frequency Division Multiplexed, OFDM, symbols from each of the base stations on a common radio frequency carrier signal, the OFDM symbols including a plurality sub-carrier signals formed in the frequency domain and modulated with the data to be communicated, the transmitting including

receiving data symbols from a first data pipe according to a first communications channel for transmission,

receiving data symbols from a local insertion data pipe according to a local communications channel for transmission,

modulating (8) the sub-carrier signals of the OFDM symbols with either

the data symbols from the first data pipe or

the data symbols from the first data pipe and/or the local insertion pipe, the modulation of the sub-carrier signals of the OFDM symbols with the data symbols from the first data pipe being performed by mapping the data symbols according to a first modulation scheme (20), and

the modulation of the sub-carrier signals of the OFDM symbols with the data symbols from the first data pipe and the local insertion pipe being performed by mapping the data symbols from the local insertion pipe and the first data pipe according to a second modulation scheme (22), and

modulating a radio frequency carrier signal with the OFDM symbols for transmission, wherein

the first modulation scheme is a lower order modulation scheme providing first modulation symbols with values from a smaller number of constellation points in the complex plane than the second modulation scheme which is a higher order modulation scheme, the second modulation scheme providing second modulation symbols with values which are disposed in the complex plane about corresponding values of the first modulation scheme, with the effect that detection of one of the second modulation symbols of the second modulation scheme will provide data symbols from the local insertion pipe and/or the first data pipe and allow the detection of first modulation symbols from the first modulation scheme providing data symbols from the first data pipe, in the presence of modulation symbols from the second modulation scheme, thereby providing a plurality of modulation layers, **characterized by**,

arranging for a first sub-set of one or more of the base stations (112) within the geographical area to transmit the data from the first data pipe and the local insertion pipe when a second sub-set of one or more of the plurality of base stations (110) transmit data from the first data pipe only and arranging for the base stations from the first sub-set and the second sub-set to transmit on the common radio frequency carrier signal.

10. A method as claimed in Claim 9, wherein the method includes
forming the modulated sub-carrier signals into the OFDM symbols,
arranging the OFDM symbols for transmission according to a time division multiplexed frame, and
transmitting the OFDM symbols which are carrying data symbols from both the first data pipe and the local insertion pipe using the second modulation scheme in some time division multiplexed frames and not in other frames.

11. A method of communicating as claimed in Claim 9 or 10, wherein the base stations are formed into clusters, each cluster including a predetermined number of the base stations, each base station in the cluster being assigned to one of a corresponding number of time division multiplexed frames, and the transmitter of the base station is arranged to transmit the OFDM symbols which are carrying data symbols from both the first data pipe and the local insertion pipe using the second modulation scheme in the time division multiplexed frame which has been assigned to that base station and not in other frames.

12. A method as claimed in any of Claims 9, 10 or 11, wherein the transmitter is arranged to transmit data symbols from the OFDM symbols in accordance with a Hand-held Digital Video Broadcasting standard.

13. A computer program stored on a storage medium, which when loaded onto a computer performs the method according to any of Claims 9 to 12.

**Patentansprüche**

1. Kommunikationssystem, das Folgendes umfasst
eine Vielzahl von Basisstationen (1), die in einem geografischen Gebiet zum Bereitstellen einer Einrichtung für drahtlose Kommunikationen mit Mobilvorrichtungen innerhalb eines Funkversorgungsgebietes angeordnet ist, das durch die Basisstationen zur Verfügung gestellt wird, wobei jede der Basisstationen Folgendes aufweist
einen Sender zum Senden von Daten über orthogonale Frequenzmultiplex(Orthogonal Frequency Division Multiplex, OFDM)-Symbole auf einem gemeinsamen Funkfrequenzsignal, wobei die OFDM-Symbole eine Vielzahl von Teilträgersignalen aufweisen, die in der Frequenzdomäne ausgebildet werden und mit den Daten, die kommuniziert werden sollen, moduliert werden, wobei der Sender Folgendes aufweist

einen Modulator (8), der beim Betrieb dazu eingerichtet ist, an einem ersten Eingang Datensymbole von einer ersten Datenpipe gemäß einem ersten Kommunikationskanal zur Übertragung zu empfangen,

an einem zweiten Eingang Datensymbole von einer lokalen Einfügungsdatenpipe gemäß einem lokalen Kommunikationskanal zur Übertragung zu empfangen, und

die Teilträgersignale der OFDM-Symbole entweder mit

den Datensymbolen von der ersten Datenpipe oder den Datensymbolen sowohl von der ersten Datenpipe als auch der lokalen Einfügungspipe zu modulieren, wobei die Modulation der Teilträgersignale der OFDM-Symbole mit den Datensymbolen von der ersten Datenpipe durch Abbilden der Datensymbole gemäß einem ersten Modulationsschema (20) durchgeführt wird, und

die Modulation der Teilträgersignale der OFDM-Symbole mit den Datensymbolen von der ersten Datenpipe und der lokalen Einfügungspipe durch Abbilden der Datensymbole gemäß einem zweiten Modulationsschema (22) durchgeführt wird, und

einen Funkfrequenzmodulator, welcher dazu eingerichtet ist, ein Funkfrequenzträgersignal mit den OFDM-Symbolen zur Übertragung zu modulieren, wobei

es sich bei dem ersten Modulationsschema um ein Modulationsschema niedrigerer Ordnung handelt, das erste Modulationssymbole mit Werten von einer kleineren Anzahl an Konstellationspunkten in der komplexen Ebene zur Verfügung stellt als das zweite Modulationsschema, bei dem es sich um ein Modulationsschema höherer Ordnung handelt, wobei das zweite Modulationsschema zweite Modulationssymbole mit Werten zur Verfügung stellt, die in der komplexen Ebene um entsprechende Werte des ersten Modulationsschemas herum mit der Wirkung angeordnet sind, dass die Detektierung von einem der zweiten Modulationssymbole des zweiten Modulationsschemas Datensymbole von der lokalen Einfügungspipe und/oder der ersten Datenpipe zur Verfügung stellen wird, und die Detektierung von ersten Modulationssymbolen von dem ersten Modulationsschema ermöglichen wird, die Datensymbole von der ersten Datenpipe zur Verfügung zu stellen, bei Vorhandensein von Modulationssymbolen von dem zweiten Modulationsschema, wodurch dem Modulator eine Vielzahl von Modulationsschichten zur Verfügung gestellt wird, **dadurch gekennzeichnet, dass**

ein erster Teilsatz von einer oder mehreren der Basisstationen (112) innerhalb des geografischen Gebiets dazu eingerichtet ist, die Daten von der ersten Datenpipe und der lokalen Einfügungspipe zu übertragen, wenn ein zweiter Teilsatz von einer oder mehreren Basisstationen (110) dazu eingerichtet ist, Daten nur von der ersten Datenpipe zu übertragen, und die Basisstationen von dem ersten Teilsatz und dem zweiten Teilsatz dazu eingerichtet sind, auf dem gemeinsamen Funkfrequenzträgersignal zu übertragen.

2. Kommunikationssystem nach Anspruch 1, wobei der Sender eine Zeitplanungseinrichtung zum Ausbilden der modulierten Teilträgersignale zu den OFDM-Symbolen und eine Rahmeneinheit zum Anordnen der OFDM-Symbole zur Übertragung gemäß einem Zeitmultiplexrahmen aufweist, und wobei die Zeitplanungseinrichtung und die Rahmeneinheit dazu eingerichtet sind, OFDM-Symbole zu übertragen, welche Datensymbole sowohl von der ersten Datenpipe als auch der lokalen Einfügungspipe unter Verwendung des zweiten Modulationsschemas in einigen Zeitmultiplexrahmen und nicht in anderen Rahmen befördern.

3. Kommunikationssystem nach Anspruch 2, wobei die Basisstationen zu Clustern ausgebildet sind, wobei jedes Cluster eine zuvor festgelegte Anzahl an Basisstationen aufweist, wobei jede Basisstation in dem Cluster einem einer entsprechenden Anzahl an Zeitmultiplexrahmen zugewiesen wird, und der Sender der Basisstation dazu eingerichtet ist, die OFDM-Symbole zu übertragen, welche Datensymbole von sowohl der ersten Datenpipe als auch der lokalen Einfügungspipe unter Verwendung des zweiten Modulationsschemas in dem Zeitmultiplexrahmen, welcher dieser Basisstation zugewiesen ist, und nicht in anderen Rahmen befördern.

4. Kommunikationssystem nach Anspruch 3, wobei die zuvor festgelegte Anzahl an Basisstationen in dem Cluster in Übereinstimmung mit einer Basisbandbreite, die der lokalen Einfügungspipe zugewiesen ist, und eine Erhöhung von Rauschen festgelegt wird, das durch die Übertragung der OFDM-Symbole verursacht wird, welche Datensymbole von sowohl der ersten Datenpipe als auch der lokalen Einfügungspipe unter Verwendung des zweiten Modulationsschemas an Empfänger von Mobilvorrichtungen befördern, welche Daten von OFDM-Symbolen mit Teilträgern detektieren und sie wiederherstellen, die in Übereinstimmung mit dem ersten Modulationsschema moduliert wurden.

5. Kommunikationssystem nach einem der Ansprüche 2, 3 oder 4, wobei die erste Datenpipe eine Fehlerkorrekturcodierungseinrichtung, die dazu eingerichtet ist, die Datensymbole in Übereinstimmung mit einem Fehlerkorrekturcode zu codieren, und eine Verschachtelungseinrichtung aufweist, die dazu eingerichtet ist, die codierten Datensymbole zu kommunizieren, die sich auf einer Vielzahl von OFDM-Symbolen in der Nähe voneinander befinden, mit der Auswirkung, dass Rauschen, das durch die Übertragung von OFDM-Symbolen hervorgerufen wird, welche Datensymbole von sowohl der ersten Datenpipe als auch der lokalen Einfügungspipe unter Verwendung des zweiten Modulationsschemas befördern, reduziert wird, nachdem die codierten Datensymbole an einem Empfänger wiederhergestellt, entschachtelt und Fehlerkorrektur decodiert werden.

6. Kommunikationssystem nach einem der Ansprüche 2 bis 5, wobei die Anzahl an Basisstationen in jedem Cluster vier beträgt.

7. Kommunikationssystem nach einem vorhergehenden Anspruch, wobei es sich bei dem ersten Modulationsschema um N-QAM und dem zweiten Modulationsschema um M-QAM handelt, wobei N < M und M/N gleich zwei oder mehr ist.

8. Kommunikationssystem nach einem vorhergehenden Anspruch, wobei das Kommunikationssystem dazu eingerichtet ist, in Übereinstimmung mit einem digitalen Fernseh- und Rundfunkstandard für Handgeräte zu funktionieren.

9. Verfahren zum Kommunizieren unter Verwendung einer Vielzahl von Basisstationen (1), die in einem geografischen Gebiet zum Bereitstellen einer Einrichtung für drahtlose Kommunikationen mit Mobilvorrichtungen innerhalb eines Funkversorgungsgebietes angeordnet ist, das durch die Basisstationen zur Verfügung gestellt wird, wobei das Verfahren Folgendes aufweist

Übertragen von Daten über orthogonale Frequenzmultiplex(OFDM)-Symbole von jeder der Basisstationen auf einem gemeinsamen Funkfrequenzsignal, wobei die OFDM-Symbole eine Vielzahl von Teilträgersignalen aufweisen, die in der Frequenzdomäne ausgebildet werden und mit den Daten moduliert werden, die kommuniziert werden sollen, wobei das Übertragen Folgendes aufweist

Empfangen von Datensymbolen von einer ersten Datenpipe gemäß einem ersten Kommunikationskanal zur Übertragung,

Empfangen von Datensymbolen von einer lokalen Einfügungsdatenpipe gemäß einem lokalen Kommunikationskanal zur Übertragung,

Modulieren (8) der Teilträgersignale der OFDM-Symbole entweder mit

den Datensymbolen von der ersten Datenpipe oder den Datensymbolen von der ersten Datenpipe und/oder der lokalen Einfügungspipe, wobei die Modulation der Teilträgersignale der OFDM-Symbole mit den Datensymbolen von der ersten Datenpipe durch Abbilden der Datensymbole gemäß einem ersten Modulationsschema (20) durchgeführt wird, und

wobei die Modulation der Teilträgersignale der OFDM-Symbole mit den Datensymbolen von der ersten Datenpipe und der lokalen Einfügungspipe durch Abbilden der Datensymbole von der lokalen Einfügungspipe und der ersten Datenpipe gemäß einem zweiten Modulationsschema (22) durchgeführt wird, und

Modulieren eines Funkfrequenzträgersignals mit OFDM-Symbolen zur Übertragung, wobei

es sich bei dem ersten Modulationsschema um ein Modulationsschema niedrigerer Ordnung handelt, das erste Modulationssymbole mit Werten von einer kleineren Anzahl an Konstellationspunkten in der komplexen Ebene zur Verfügung stellt als das zweite Modulationsschema, bei dem es sich um ein Modulationsschema höherer Ordnung handelt, wobei das zweite Modulationsschema zweite Modulationssymbole mit Werten zur Verfügung stellt, die in der komplexen Ebene um entsprechende Werte des ersten Modulationsschemas herum mit der Wirkung angeordnet sind, dass die Detektierung von einem der zweiten Modulationssymbole des zweiten Modulationsschemas Datensymbole von der lokalen Einfügungspipe und/oder der ersten Datenpipe zur Verfügung stellen wird, und die Detektierung von ersten Modulationssymbolen von dem ersten Modulationsschema ermöglichen wird, die Datensymbole von der ersten Datenpipe zur Verfügung zu stellen, bei Vorhandensein von Modulationssymbolen von dem zweiten Modulationsschema, wodurch dem Modulator eine Vielzahl von Modulationsschichten zur Verfügung gestellt wird, **gekennzeichnet, durch**

das Einrichten eines ersten Teilsatzes von einer oder mehreren Basisstationen (112) innerhalb des geografischen Gebietes, um die Daten von der ersten Datenpipe und der lokalen Einfügungspipe zu übertragen, wenn ein zweiter Teilsatz von einer oder mehreren der Vielzahl von Basisstationen (110) Daten nur von der ersten Datenpipe überträgt, und das Einrichten für die Basisstationen von dem ersten Teilsatz und dem zweiten Teilsatz, um auf dem gemeinsamen Funkfrequenzträgersignal zu übertragen.

10. Verfahren nach Anspruch 9, wobei das Verfahren Folgendes aufweist

das Ausbilden der modulierten Teilträgersignale zu den OFDM-Symbolen,

das Anordnen der OFDM-Symbole zur Übertragung gemäß einem Zeitmultiplexrahmen, und

das Übertragen der OFDM-Symbole, welche Datensymbole von sowohl der ersten Datenpipe als auch der lokalen Einfügungspipe unter Verwendung des zweiten Modulationsschemas in einigen Zeitmultiplexrahmen und nicht in anderen Rahmen befördern.

11. Verfahren zum Kommunizieren nach Anspruch 9 oder 10, wobei die Basisstationen zu Clustern ausgebildet sind, wobei jedes Cluster eine zuvor festgelegte Anzahl der Basisstationen aufweist, wobei jede Basisstation in dem Cluster einem einer entsprechenden Anzahl an Zeitmultiplexrahmen zugewiesen wird, und der Sender der Basisstation dazu eingerichtet ist, die OFDM-Symbole zu übertragen, welche Datensymbole von sowohl der ersten Datenpipe als auch der lokalen Einfügungspipe unter Verwendung des zweiten Modulationsschemas in dem Zeitmultiplexrahmen, welcher dieser Basisstation zugewiesen ist, und nicht in anderen Rahmen befördern.

12. Verfahren nach einem der Ansprüche 9, 10 oder 11, wobei der Sender dazu eingerichtet ist, Datensymbole von den OFDM-Symbolen in Übereinstimmung mit einem digitalen Fernseh- und Rundfunkstandard für Handgeräte zu übertragen.

13. Computerprogramm, das in einem Speicherungsmedium gespeichert ist, welches, wenn es in einen Computer geladen wird, das Verfahren nach einem der Ansprüche 9 bis 12 durchführt.

**Revendications**

1. Système de communications, comprenant :

une pluralité de stations de base (1) réparties sur l'ensemble d'une zone géographique pour fournir une installation permettant les communications sans fil avec des dispositifs mobiles au sein d'une zone de couverture radio fournie par les stations de base, chacune des stations de base comportant
un émetteur destiné à transmettre des données via des symboles multiplexés par répartition orthogonale de la fréquence, OFDM, sur un signal radiofréquence commun, les symboles OFDM comportant une pluralité de signaux de sous-porteuse formés dans le domaine fréquentiel et modulés à l'aide des données à communiquer, l'émetteur comportant
un modulateur (8) configuré, en service, pour recevoir, sur une première entrée, des symboles de données issus d'une première conduite de données selon un premier canal de communications en vue de leur transmission,
recevoir, sur une deuxième entrée, des symboles de données issus d'une conduite de données d'insertion locale selon un canal de communications local en vue de leur transmission, et moduler les signaux de sous-porteuse des symboles OFDM à l'aide soit
des symboles de données issus de la première conduite de données, soit
des symboles de données issus à la fois de la première conduite de données et de la conduite d'insertion locale, la modulation des signaux de sous-porteuse des symboles OFDM à l'aide des symboles de données issus de la première conduite de données étant réalisée par mappage des symboles de données selon un premier schéma de modulation (20), et
la modulation des signaux de sous-porteuse des symboles OFDM à l'aide des symboles de données issus de la première conduite de données et de la conduite d'insertion locale étant réalisé par mappage des symboles de données selon un deuxième schéma de modulation (22), et
un modulateur radiofréquence configuré pour moduler un signal de porteuse radiofréquence à l'aide des symboles OFDM en vue de leur transmission, dans lequel
le premier schéma de modulation est un schéma de modulation d'ordre inférieur fournissant des premiers symboles de modulation de valeurs issues d'un plus petit nombre de points de constellation dans le plan complexe que le deuxième schéma de modulation qui est un schéma de modulation d'ordre supérieur, le deuxième schéma de modulation fournissant des deuxièmes symboles de modulation de valeurs situées dans le plan complexe autour de valeurs correspondantes du premier schéma de modulation, de sorte que la détection d'un des deuxièmes symboles de modulation du deuxième schéma de modulation fournira des symboles de données issus de la conduite d'insertion locale et/ou de la première conduite de données et permettra la détection de premiers symboles de modulation issus du premier schéma de modulation fournissant des symboles de données issus de la première conduite de données, en présence de symboles de modulation issus du deuxième schéma de modulation, pour ainsi doter le modulateur d'une pluralité de couches de modulation, **caractérisé en ce que**
un premier sous-ensemble constitué d'une ou de plusieurs stations de base (112) au sein de la zone géographique est configuré pour transmettre les données issues de la première conduite de données et de la conduite d'insertion locale, lorsqu'un deuxième sous-ensemble constitué d'une ou de plusieurs stations de base (110) est configuré pour transmettre des données issues de la première conduite de données uniquement, et les stations de base du premier sous-ensemble et du deuxième sous-ensemble sont configurées pour transmettre sur le signal de porteuse radiofréquence commune.

2. Système de communications selon la revendication 1, dans lequel l'émetteur comporte un ordonnanceur destiné à mettre en forme les signaux de sous-porteuse modulés en les symboles OFDM et une unité de tramage destinée à configurer les symboles OFDM selon une trame multiplexée par répartition dans le temps en vue de leur transmission, et dans lequel l'ordonnanceur et l'unité de tramage sont configurés pour transmettre des symboles OFDM qui véhiculent des symboles de données issus à la fois de la première conduite de données et de la conduite d'insertion locale au moyen du deuxième schéma de modulation dans certaines trames multiplexées par répartition dans le temps et pas dans d'autres trames.

3. Système de communications selon la revendication 2, dans lequel les stations de base sont regroupées en grappes, chaque grappe comportant un nombre prédéterminé des stations de base, chaque station de base dans la grappe étant assignée à l'une d'un nombre correspondant de trames multiplexées par répartition dans le temps, et l'émetteur de la station de la base est configuré pour transmettre les symboles OFDM qui véhiculent des symboles de données issus à la fois de la première conduite de données et de la conduite d'insertion locale au moyen du deuxième schéma de modulation dans la trame multiplexée par répartition dans le temps qui a été assignée à cette station de base et pas dans d'autres trames.

4. Système de communications selon la revendication 3, dans lequel le nombre prédéterminé de stations de base dans la grappe est déterminé selon une bande passante en bande de base assignée à la conduite d'insertion locale et un accroissement du bruit dû à la transmission des symboles OFDM véhiculant des symboles de données issus à la fois de la première conduite de données et de la conduite d'insertion locale au moyen du deuxième schéma de modulation au niveau de récepteurs de dispositifs mobiles qui détectent et récupèrent des données à partir de symboles OFDM avec des sous-porteuses modulées selon le premier schéma de modulation.

5. Système de communications selon l'une quelconque des revendications 2, 3 ou 4, dans lequel la première conduite de données comporte un codeur correcteur d'erreur, configuré pour coder les symboles de données selon un code correcteur d'erreur, et un entrelaceur, configuré pour communiquer des symboles de données codés proches les uns des autres sur une pluralité des symboles OFDM, de sorte à réduire le bruit produit par la transmission de symboles OFDM véhiculant des symboles de données issus à la fois de la première conduite de données et de la conduite d'insertion locale au moyen du deuxième schéma de modulation, suite à la récupération des symboles de données codés au niveau d'un récepteur, à leur désentrelacement et à leur décodage correcteur d'erreur.

6. Système de communications selon l'une quelconque des revendications 2 à 5, dans lequel le nombre de stations de base dans chaque grappe est de quatre.

7. Système de communications selon l'une quelconque des revendications précédentes, dans lequel le premier schéma de modulation est le schéma N-QAM et le deuxième schéma de modulation est le schéma M-QAM, où N < M et M/N est supérieur ou égal à deux.

8. Système de communications selon l'une quelconque des revendications précédentes, lequel système de communication est configuré pour fonctionner selon une norme de diffusion vidéo numérique pour appareils mobiles.

9. Procédé de communication au moyen d'une pluralité de stations de base (1) réparties sur l'ensemble d'une zone géographique pour fournir une installation permettant les communications sans fil avec des dispositifs mobiles au sein d'une zone de couverture radio fournie par les stations de base, le procédé comprenant l'étape suivante
transmission de données via des symboles multiplexés par répartition orthogonale de la fréquence, OFDM, depuis chacune des stations de base sur un signal radiofréquence commun, les symboles OFDM comportant une pluralité de signaux de sous-porteuse formés dans le domaine fréquentiel et modulés à l'aide des données à communiquer, l'étape de transmission comportant les étapes suivantes
réception de symboles de données issus d'une première conduite de données selon un premier canal de communications en vue de leur transmission,
réception de symboles de données issus d'une conduite de données d'insertion locale selon un canal de communications local en vue de leur transmission, et
modulation (8) des signaux de sous-porteuse des symboles OFDM à l'aide soit
des symboles de données issus de la première conduite de données, soit
des symboles de données issus de la première conduite de données et/ou de la conduite d'insertion locale, la modulation des signaux de sous-porteuse des symboles OFDM à l'aide des symboles de données issus de la première conduite de données étant réalisée par mappage des symboles de données selon un premier schéma de modulation (20), et
la modulation des signaux de sous-porteuse des symboles OFDM à l'aide des symboles de données issus de la première conduite de données et de la conduite d'insertion locale étant réalisée par mappage des symboles de données issus de la conduite d'insertion locale et de la première conduite de données selon un deuxième schéma de modulation (22), et

modulation d'un signal de porteuse radiofréquence à l'aide des symboles OFDM en vue de leur transmission, dans lequel

le premier schéma de modulation est un schéma de modulation d'ordre inférieur fournissant des premiers symboles de modulation de valeurs issues d'un plus petit nombre de points de constellation dans le plan complexe que le deuxième schéma de modulation qui est un schéma de modulation d'ordre supérieur, le deuxième schéma de modulation fournissant des deuxièmes symboles de modulation de valeurs situées dans le plan complexe autour de valeurs correspondantes du premier schéma de modulation, de sorte que la détection d'un des deuxièmes symboles de modulation du deuxième schéma de modulation fournira des symboles de données issus de la conduite d'insertion locale et/ou de la première conduite de données et permettra la détection de premiers symboles de modulation issus du premier schéma de modulation fournissant des symboles de données issus de la première conduite de données, en présence de symboles de modulation issus du deuxième schéma de modulation, pour ainsi doter le modulateur d'une pluralité de couches de modulation, **caractérisé par** les étapes suivantes configuration d'un premier sous-ensemble constitué d'une ou de plusieurs stations de base (112) au sein de la zone géographique pour qu'il transmette les données issues de la première conduite de données et de la conduite d'insertion locale, lorsqu'un deuxième sous-ensemble constitué d'une ou de plusieurs de la pluralité de stations de base (110) transmet des données issues de la première conduite de données uniquement, et configuration des stations de base du premier sous-ensemble et du deuxième sous-ensemble pour qu'elles transmettent sur le signal de porteuse radiofréquence commune.

10. Procédé selon la revendication 9, lequel procédé comporte les étapes suivantes
mise en forme des signaux de sous-porteuse modulés en les symboles OFDM,
configuration des symboles OFDM selon une trame multiplexée par répartition dans le temps en vue de leur transmission, et
transmission des symboles OFDM qui véhiculent des symboles de données issus à la fois de la première conduite de données et de la conduite d'insertion locale au moyen du deuxième schéma de modulation dans certaines trames multiplexées par répartition dans le temps et pas dans d'autres trames.

11. Procédé de communication selon la revendication 9 ou 10, dans lequel les stations de base sont regroupées en grappes, chaque grappe comportant un nombre prédéterminé des stations de base, chaque station de base dans la grappe étant assignée à l'une d'un nombre correspondant de trames multiplexées par répartition dans le temps, et l'émetteur de la station de la base est configuré pour transmettre les symboles OFDM qui véhiculent des symboles de données issus à la fois de la première conduite de données et de la conduite d'insertion locale au moyen du deuxième schéma de modulation dans la trame multiplexée par répartition dans le temps qui a été assignée à cette station de base et pas dans d'autres trames.

12. Procédé selon l'une quelconque des revendications 9, 10 ou 11, dans lequel l'émetteur est configuré pour transmettre des symboles de données issus des symboles OFDM selon une norme de diffusion vidéo numérique pour appareils mobiles.

13. Programme d'ordinateur enregistré dans un support d'enregistrement, qui, une fois chargé sur un ordinateur, accomplit le procédé selon l'une quelconque des revendications 9 à 12.

FIG. 1

FIG. 2

EP 2 540 045 B1

EP 2 540 045 B1

Q   QPSK

| $b_0$ | $b_1$ |
|---|---|
| 0 | 1 |

20

| $b_0$ | $b_1$ |
|---|---|
| 0 | 0 |

20

I

| $b_0$ | $b_1$ |
|---|---|
| 1 | 0 |

20

| $b_0$ | $b_1$ |
|---|---|
| 1 | 1 |

20

$b_0 b_1$

FIG. 3a

Q   16QAM

22

22   22   22

I

22

| $a_0$ | $a_1$ |
|---|---|
| 1 | 1 |

| $a_0$ | $a_1$ |
|---|---|
| 1 | 0 |

| $a_0$ | $a_1$ |
|---|---|
| 0 | 0 |

| $a_0$ | $a_1$ |
|---|---|
| 0 | 1 |

$b_0 b_1 a_0 a_1$

FIG. 3b

System Block Diagram

FIG. 4

FIG. 5

FIG. 6

Local Content Insertion

@X:0.8A+0.2B  @Y:0.6A+0.4B  @Z:0.1A+0.9B

120  122  124

FIG. 7

EP 2 540 045 B1

FIG. 8

FIG. 9c

FIG. 9a

FIG. 9b

EP 2 540 045 B1

16QAM

F1

BS ⌐112

National Signal
QPSK

$h_L(t)$ Local Insertion

F1

$h_n(t)$

B

S(t)+d(t)

S(t)

BS ⌐110

M

A

EP 2 540 045 B1

FIG. 10

FIG. 11(b)

FIG. 11(a)

FIG. 12(a)

FIG. 12(b)

Sample Constellations

D(z)H_L(z) constellation

Residual Constellation

D(z) constellation

Equalised residual Constellation

Quadrature

In-Phase

FIG. 13(a)

Quadrature

In-Phase

FIG. 13(b)

Assume: Perfect channel Estimation

FIG. 14a

FIG. 14b

FIG. 14c

Supporting MIMO

FIG. 15

Decoding @ X:0.99A + 0.01B @ 4.375μs delay

DVB C2 - 64800, 16QAM, GI = 1/128

FIG. 16

Decoding @ X:0.8A + 0.2B @ 2.2µs delay
DVB-NGH - 64800, 6QAM, GI = 1/128

BER

SNR[dB]

QAM16$_r$ 1/2
QAM16$_r$ 3/5
QAM16$_r$ 2/3
QAM16$_r$ 3/4

FIG. 17

Decoding @ Y:0.99A + 0.01B @ 0µs delay

DVB C2 - 64800, ALL MODCODs, GI = 1/128

FIG. 18

Decoding @ Y:0.6A + 0.4B @ 0µs delay
DVB C2 - 64800, 16QAM, GI = 1/128

FIG. 19

Decoding @ Y:0.5A + 0.5B @ 0μs delay
DVB-NGH - 64800, 16QAM, GI = 1/128

FIG. 20

FIG. 21

FIG. 22

EP 2 540 045 B1

200 → **MISO/ MIMO** (146) → **QAM** (144) → **DE-INTERLEAVER** (130 142) → **FEC DECODER** (140) → 202

**FIG. 23**

FIG. 24

Estimate the national broadcast symbols S(Z)
by assuming the term $\dfrac{H_L(Z) \quad D(Z)}{[H_n(Z) + H_L(Z)]}$
as noise and slicing S(Z) to give $\hat{S}(Z)$

$\mathrm{S2}$

Since $[H_n(Z) + H_L(Z)]$ is known from the channel
estimation from the main pilots $P_S$, calculate
$\hat{S}(Z)[H_n(Z) + H_L(Z)]$ by effectively convolving
S(t) with $h_n(t) + h_L(t)$

$\mathrm{S4}$

Form an estimate of the term $D(Z)H_L(Z)$ by
subtracting $\hat{S}(t) [H_n(Z) + H_L(Z)]$ from R(Z)
the received signal

$\mathrm{S6}$

Estimate the transmission channel from the local
insertion base station $H_L(Z)$ using the LSI pilots

$\mathrm{S8}$

Estimate the local signal D(Z) by
dividing $D(Z)H_L(Z)$ by $H_L(Z)$

$\mathrm{S10}$

FIG. 25

## REFERENCES CITED IN THE DESCRIPTION

**Patent documents cited in the description**

- US 2008159186 A

- US 20080159186 A